(19) 

**Europäisches Patentamt**
**European Patent Office**
**Office européen des brevets**

(11) **EP 4 502 907 A1**

(12) **EUROPEAN PATENT APPLICATION**

(43) Date of publication:
**05.02.2025 Bulletin 2025/06**

(21) Application number: **24191391.2**

(22) Date of filing: **29.07.2024**

(51) International Patent Classification (IPC):
**G06Q 30/0242** *(2023.01)* **G06Q 30/0201** *(2023.01)*
**G06Q 30/0272** *(2023.01)*

(52) Cooperative Patent Classification (CPC):
**G06Q 30/0242; G06Q 30/0201; G06Q 30/0272**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 JP 2023125784**

(71) Applicant: **FUJITSU LIMITED**
**Kawasaki-shi, Kanagawa 211-8588 (JP)**

(72) Inventors:
• **Togawa, Taro**
**Kawasaki-shi, Kanagawa, 211-8588 (JP)**
• **Nakazato, Katsuhisa**
**Bunkyo-ku, Tokyo, 113-6591 (JP)**
• **Kohata, Shun**
**Sydney, NSW, 2000 (AU)**

(74) Representative: **Hoffmann Eitle**
**Patent- und Rechtsanwälte PartmbB**
**Arabellastraße 30**
**81925 München (DE)**

(54) **EVALUATION PROGRAM, EVALUATION METHOD, AND INFORMATION PROCESSING APPARATUS**

(57) An evaluation program for causing a computer to execute a process includes: acquiring a video obtained by imaging an area that includes a product shelf where a product is arranged; specifying a behavior of a person of purchasing the product by analyzing the acquired video; acquiring purchase psychology information that is based on the behavior of purchasing the product and that indicates purchase psychology of the person; acquiring period information regarding a period when sales promotion measures for the product are implemented; analyzing a change in the acquired purchase psychology information, before and after the sales promotion measures, based on the period information; and evaluating the sales promotion measures, based on the analyzed change.

FIG. 1

EP 4 502 907 A1

## Description

FIELD

The embodiments discussed herein are related to an evaluation program or the like.

BACKGROUND

In store management, various sales promotion measures are implemented by distributing product fliers or distributing product commercial messages (CM). In recent years, there is an increasing need to evaluate how such sales promotion measures affect a purchase behavior of a customer.

Note that, there is related art for specifying when a customer in which attribute has purchased what kind of product, by analyzing a purchase history of the customer for each membership card of a store registered in a point of sale (POS) cash register system.

Furthermore, there is related art for determining whether or not a customer being tracked has purchased a product or has left without purchasing the product, by tracking the customer by analyzing video data in the store and specifying a behavior of the customer. With such related art, it is possible to analyze when a customer other than a member has purchased the product.

Citation List

Patent Literature

[PTL 1] Japanese Laid-open Patent Publication No. 2023-094868.

SUMMARY OF INVENTION

TECHNICAL PROBLEM

However, with the related art described above, it is possible to specify whether or not the customer has purchased the product. However, a reason for the purchase is not known, and it cannot be said that effectiveness of sales promotion measures can be specified.

In one aspect, an object of the embodiments is to provide an evaluation program, an evaluation method, and an information processing device that can evaluate effectiveness of sales promotion measures.

SOLUTION TO PROBLEM

In one aspect of embodiments, an evaluation program for causing a computer to execute a process includes: acquiring a video obtained by imaging an area that includes a product shelf where a product is arranged; specifying a behavior of a person of purchasing the product by analyzing the acquired video; acquiring purchase psychology information that is based on the behavior of purchasing the product and that indicates purchase psychology of the person; acquiring period information regarding a period when sales promotion measures for the product are implemented; analyzing a change in the acquired purchase psychology information, before and after the sales promotion measures, based on the period information; and evaluating the sales promotion measures, based on the analyzed change.

ADVANTAGEOUS EFFECTS OF INVENTION

It is possible to evaluate effectiveness of sales promotion measures.

BRIEF DESCRIPTION OF DRAWINGS

FIG. 1 is a diagram illustrating an example of a system according to a first embodiment;
FIG. 2 is a diagram (1) for explaining processing of an information processing device according to the first embodiment;
FIG. 3 is a diagram (2) for explaining the processing of the information processing device according to the first embodiment;

FIG. 4 is a functional block diagram illustrating a configuration of the information processing device according to the first embodiment;

FIG. 5 is a diagram illustrating an example of a data structure of an implementation frequency information database (DB) according to the first embodiment;

FIG. 6 is a diagram illustrating an example of a data structure of a conditional probability distribution table DB according to the first embodiment;

FIG. 7 is a diagram illustrating an example of a data structure of an imaging DB according to the first embodiment;

FIG. 8 is a diagram illustrating an example of a skeleton model of a human body;

FIG. 9 is a diagram illustrating an example of a joint name;

FIG. 10 is a flowchart illustrating a processing procedure of the information processing device according to the first embodiment;

FIG. 11 is a diagram illustrating an example of a system according to a second embodiment;

FIG. 12 is a functional block diagram illustrating a configuration of an information processing device according to the second embodiment;

FIG. 13 is a diagram illustrating an example of a data structure of a reliability DB;

FIG. 14 is a diagram illustrating an example of a data structure of a conditional probability distribution table DB according to the second embodiment;

FIG. 15 is a flowchart illustrating a processing procedure of the information processing device according to the second embodiment;

FIG. 16 is a functional block diagram illustrating a configuration of an information processing device according to a third embodiment;

FIG. 17 is a diagram illustrating an example of a data structure of a degree-of-interest DB according to the third embodiment;

FIG. 18 is a diagram illustrating an example of a data structure of an implementation frequency information DB according to the third embodiment;

FIG. 19 is a diagram illustrating an example of a data structure of a conditional probability distribution table DB according to the third embodiment;

FIG. 20 is a diagram illustrating an example of a conditional probability distribution table according to the third embodiment;

FIG. 21 is a diagram for explaining processing of an update unit according to the third embodiment;

FIG. 22 is a flowchart illustrating a processing procedure of the information processing device according to the third embodiment; and

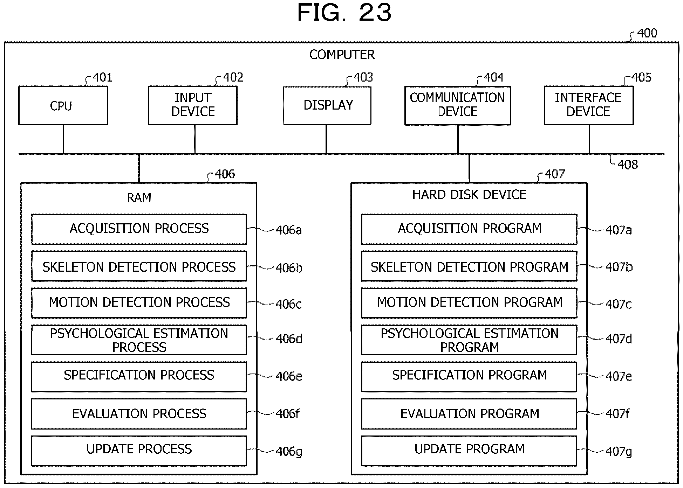

FIG. 23 is a diagram illustrating an example of a hardware configuration of a computer that implements functions similar to those of the information processing device according to the embodiments.

DESCRIPTION OF EMBODIMENTS

Hereinafter, embodiments of an evaluation program, an evaluation method, and an information processing device disclosed in the present application will be described in detail with reference to the drawings. Note that these embodiments do not limit the present invention.

[First Embodiment]

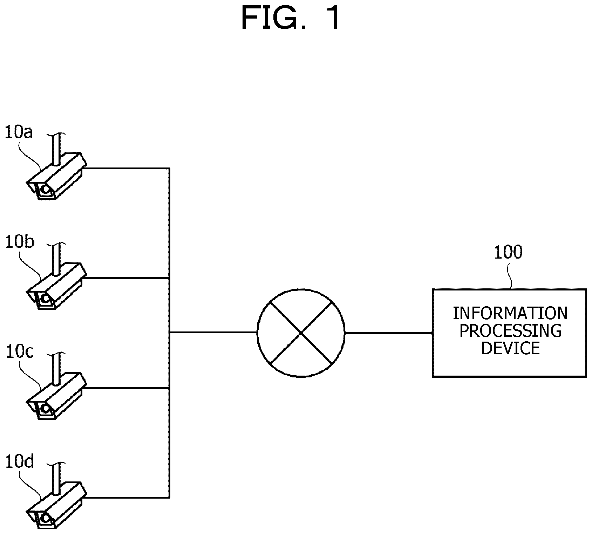

An example of a system according to a first embodiment will be described. FIG. 1 is a diagram illustrating an example of the system according to the first embodiment. As illustrated in FIG. 1, this system includes cameras 10a, 10b, 10c, and 10d and an information processing device 100. The cameras 10a to 10d and the information processing device 100 are coupled to each other via a network.

In FIG. 1, for convenience of explanation, the cameras 10a to 10d and the system according to the first embodiment may further include other cameras.

The cameras 10a to 10d are installed at predetermined positions in a store. A plurality of products is arranged in the store. The positions (coordinates) where the cameras 10a to 10d are installed are different positions from each other. In the following description, in a case where the cameras 10a to 10d are not particularly distinguished, the cameras 10a to 10d are referred to as a "camera 10".

The camera 10 images a video in the store and transmits data of the imaged video to the information processing device 100. It is assumed that each of imaging ranges of the cameras 10a to 10d include a customer and a product shelf. In the following description, the data of the video to be transmitted to the in the information processing device 100 by the camera 10 is referred to as "video data".

The video data includes a plurality of time-series image frames. A frame number is assigned to each image frame in ascending order of time series. One image frame is a still image imaged by the camera 10 at a certain timing. Time data may be added to each image frame. Camera identification information used to identify the camera 10 that has imaged the video data is set to the video data.

The information processing device 100 repeatedly executes processing for specifying a behavior of the customer for purchasing a product by analyzing the video data imaged by the camera 10 and specifying a degree of interest according to the specified behavior. Furthermore, the information processing device 100 acquires period information regarding a period when sales promotion measures for the product are implemented and evaluates the sales promotion measures based on a change in the degree of interest before and after the sales promotion measures. As a result, it is possible to evaluate the effectiveness of the sales promotion measures.

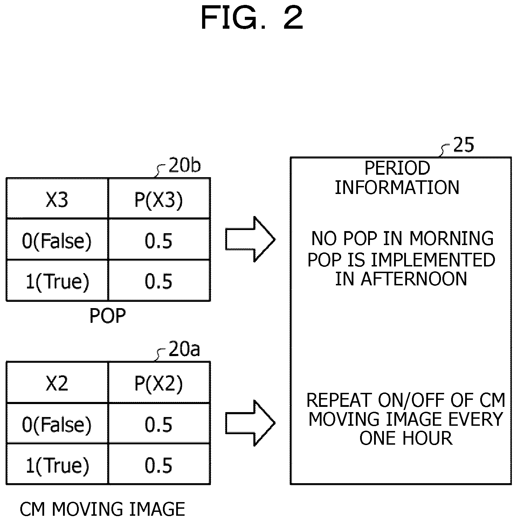

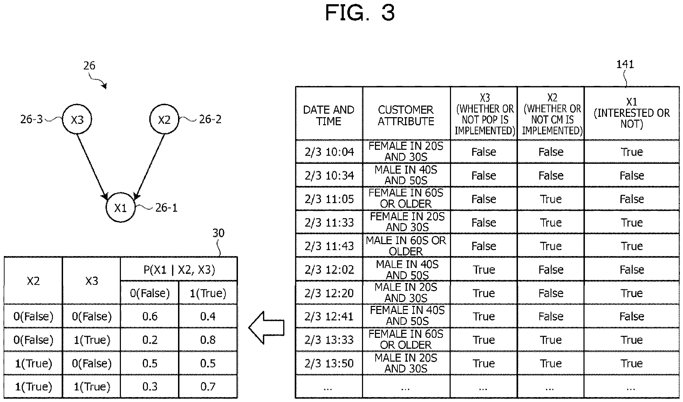

Subsequently, processing of the information processing device 100 will be specifically described. FIGs. 2 and 3 are diagrams for explaining the processing of the information processing device according to the first embodiment. The information processing device 100 holds implementation frequency information of each of the sales promotion measures. The implementation frequency information is information indicating how frequently the sales promotion measures are implemented as a probability. In the example illustrated in FIG. 2, implementation frequency information 20a of sales promotion measures "CM moving image" and implementation frequency information 20b of sales promotion measures "point of purchase display (POP)" are illustrated.

When a value of "X2" is "0 (False)" in the implementation frequency information 20a, this indicates that the sales promotion measures "CM moving image" are not implemented. When the value of "X2" is "1 (True)", this indicates that the sales promotion measures "CM moving image" are implemented. Furthermore, "P (X3)" in a case where the value of "X2" is "0 (False)" indicates a probability that the sales promotion measures "CM moving image" are not implemented.

"P (X2)" in a case where the value of "X2" is "1 (True)" indicates a probability that the sales promotion measures "CM moving image" are implemented.

When a value of "X3" is "0 (False)" in the implementation frequency information 20b, this indicates that the sales promotion measures "POP" are not implemented. When the value of "X3" is "1 (True)", this indicates that the sales promotion measures "POP" are implemented. Furthermore, "P (X3)" in a case where the value of "X3" is "0 (False)" indicates a probability that the sales promotion measures "POP" are not implemented. "P (X3)" in a case where the value of "X3" is "1 (True)" indicates a probability that the sales promotion measures "POP" are implemented.

In a case where an administrator of the information processing device 100 knows effectiveness of the sales promotion measures at another store or the like in advance, the administrator designates initial values of "P (X2)" of the implementation frequency information 20a and P (X3) of the implementation frequency information 20b, based on sales results of the other stores. Note that the information processing device 100 may set a frequency (0.5) as the initial values of the P (X2) of the implementation frequency information 20a and P (X3) of the implementation frequency information 20b.

The information processing device 100 estimates an implementation period of each sales promotion measure based on the implementation frequency information 20a and 20b and sets the implementation period to period information 25. For example, the information processing device 100 sets repetition of ON/OFF of a CM operation every one hour to the period information 25, based on the implementation frequency information 20a. The information processing device 100 sets, to the period information 25, that the POP is not implemented in the morning and the POP is implemented in the afternoon, based on the implementation frequency information 20b.

The description proceeds to FIG. 3. In a process for repeatedly executing the processing for specifying the behavior of the customer for purchasing the product by analyzing the video data imaged by the camera 10 and specifying the degree of interest according to the specified behavior, the information processing device 100 registers information regarding the degree of interest in a degree-of-interest DB 141.

As illustrated in FIG. 3, the degree-of-interest DB 141 includes a date and time, a customer attribute, X3, X2, and X1. The date and time is a date and time when the degree of interest is specified. The customer attribute is an attribute of a customer whose degree of interest is specified. X1 indicates presence or absence of interest. For example, in a case where the degree of interest is equal to or more than a threshold, X1 is "True". In a case where the degree of interest is less than the threshold, X1 is "False". Description regarding X3 and X2 is similar to the above description.

The information processing device 100 specifies the values of X3 and X2, based on the period information 25 and the date and time when the degree of interest is specified. For example, if the date and time when the degree of interest is specified, based on the period information 25, is a date and time when the CM moving image is implemented, the information processing device 100 sets X2 as "True". If the date and time when the degree of interest is specified is a date and time when the CM moving image is not implemented, based on the period information 25, the information processing device 100 sets X2 as "False".

If the date and time when the degree of interest is specified, based on the period information 25, is a date and time when the POP is implemented, the information processing device 100 sets X3 as "True". If the date and time when the degree of interest is specified is a date and time when the POP is not implemented, based on the period information 25, the information processing device 100 sets X3 as "False".

In a record in a first row in FIG. 3, the sales promotion measures "POP" and "CM moving image" are not implemented at a date and time "2/3 10:04", and this indicates that a customer attribute "female in 20s and 30s" is not interested in the product at that date and time.

Note that a relationship between X1, X2, and X3 can be expressed by a Bayesian net 26. A node 26-1 is a node corresponding to X1. A node 26-2 is a node corresponding to X2. A node 26-3 is a node corresponding to X3.

The information processing device 100 calculates a conditional probability distribution table based on the degree-of-interest DB 141, for each customer attribute. A conditional probability distribution table 30 in FIG. 3 is a conditional probability distribution table of the customer attribute "female in 20s and 30s". In a case of generating the conditional probability distribution table 30, the information processing device 100 uses a record of the customer attribute "female in 20s and 30s", among the records of the degree-of-interest DB 141.

The conditional probability distribution table 30 includes X2, X3, and P (X1 | X2, X3). Description regarding X1, X2, and X3 is similar to the above description. P (X1 | X2, X3) is a probability of an event X1, under a condition that events X2 and X3 occur.

A record in a first row in the conditional probability distribution table 30 indicates that a probability that the degree of interest of the customer is less than the threshold is "0.6 (60%, the same applies below)" under a condition that X2 is "False" and X3 is "False". Furthermore, it is indicated that a probability that the degree of interest of the customer is equal to or more than the threshold is "0.4", under the condition that X2 is "False" and X3 is "False".

For example, the information processing device 100 specifies records in which X2 is "False" and X3 is "False" from among the records of the customer attribute "female in 20s and 30s" and sets a ratio, at which X1 = False, in the specified records to a cell of the conditional probability distribution table 30 corresponding to X2 = False, X3 = False, and P (X1 | X2, X3) = False. The information processing device 100 specifies records in which X2 is "False" and X3 is "False" from among the records of the customer attribute "female in 20s and 30s" and sets a ratio, at which X1 = True, in the specified records to a cell of the conditional probability distribution table 30 corresponding to X2 = False, X3 = False, and P (X1 | X2, X3) = True.

A record in a second row in the conditional probability distribution table 30 indicates that the probability that the degree of interest of the customer is less than the threshold is "0.2", under a condition that X2 is "False" and X3 is "True". Furthermore, it is indicated that the probability that the degree of interest of the customer is equal to or more than the threshold is "0.8", under the condition that X2 is "False" and X3 is "True".

A record in a third row in the conditional probability distribution table 30 indicates that the probability that the degree of interest of the customer is less than the threshold is "0.5", under a condition that X2 is "True" and X3 is "False". Furthermore, it is indicated that the probability that the degree of interest of the customer is equal to or more than the threshold is "0.5", under the condition that X2 is "True" and X3 is "False".

A record in a fourth row in the conditional probability distribution table 30 indicates that the probability that the degree of interest of the customer is less than the threshold is "0.3", under a condition that X2 is "True" and X3 is "True". Furthermore, it is indicated that the probability that the degree of interest of the customer is equal to or more than the threshold is "0.7", under a condition that X2 is "True" and X3 is "False".

Note that, in a case where the number of records of the customer attribute "female in 20s and 30s" is equal to or more than a predetermined number (for example, equal to or more than 20), the information processing device 100 may calculate the conditional probability distribution table 30.

Although the conditional probability distribution table 30 of the customer attribute "female in 20s and 30s" is illustrated in FIG. 3, the information processing device 100 similarly generates conditional probability distribution tables of other customer attributes.

The conditional probability distribution table 30 generated by the information processing device 100 is an evaluation result of the effectiveness of the sales promotion measures. For example, it is found that, when the record in the first row in the conditional probability distribution table 30 is compared with the record in the fourth row, the degree of interest of the customer is higher when the sales promotion measures are implemented as compared with a case where the sales promotion measures are not implemented. Furthermore, it is found that, when the record in the second row in the conditional probability distribution table 30 is compared with the record in the third row, the degree of interest of the customer in a case of the sales promotion measures "POP" alone is higher than that in a case of the sales promotion measures "CM moving image" alone.

Here, after generating the conditional probability distribution table, the information processing device 100 updates the implementation period of the sales promotion measures. By calculating a ratio of P (X1 | X2, X3) in a case where each of X2 and X3 is 1 (True), the information processing device 100 sets an implementation frequency of each sales promotion measure. Here, description will be made using the conditional probability distribution table 30 corresponding to the customer attribute "female in 20s and 30s".

For example, an implementation frequency P' (X2) after update of the sales promotion measures "POP (X2)" is calculated by the formula (1). According to a calculation result of the formula (1), a value of the implementation frequency P' (X2) is "0.5 (probability of implementation)". The information processing device 100 updates P (X2) of the implementation frequency information 20a by P' (X2) based on the calculation result.

[Expression 1]

$$P'(X2) = \frac{\sum_{X2=1} P(X1|X2,X3)}{\sum P(X1|X2,X3)} = \frac{0.5 + 0.7}{0.4 + 0.8 + 0.5 + 0.7} = 0.5 \qquad \cdots (1)$$

An implementation frequency P' (X3) after update of the sales promotion measures °CM moving image (X3)" is calculated by the formula (2). According to a calculation result of the formula (2), a value of the implementation frequency P' (X3) is "0.625 (probability of implementation)". The information processing device 100 updates P (X3) of the implementation frequency information 20b by P' (X3), based on the calculation result.

[Expression 2]

$$P'(X3) = \frac{\sum_{X3=1} P(X1|X2,X3)}{\sum P(X1|X2,X3)} = \frac{0.8 + 0.7}{0.4 + 0.8 + 0.5 + 0.7} = 0.625 \qquad \cdots (2)$$

Note that, in the calculation of the ratio described above, by calculating the ratio after excluding a value at which P (X1 | X2, X3) is less than a predetermined value, the information processing device 100 can calculate the implementation frequencies P' (X2) and P' (X3), after completely excluding the sales promotion measures with a low probability to be selected.

For example, in a case where a value at which P (X1 | X2, X3) is equal to or less than 0.5 is excluded, the information processing device 100 can calculate the implementation frequency P' (X2) as in the formula (3). Furthermore, in a case where the value at which P (X1 | X2, X3) is equal to or less than 0.5 is excluded, the information processing device 100 can calculate the implementation frequency P' (X3) as in the formula (4).

[Expression 3]

$$P'(X2) = \frac{\sum_{X2=1} P(X1|X2,X3)}{\sum P(X1|X2,X3)} = \frac{0.7}{0.8 + 0.7} = 0.467 \qquad \cdots (3)$$

[Expression 4]

$$P'(X3) = \frac{\sum_{X3=1} P(X1|X2,X3)}{\sum P(X1|X2,X3)} = \frac{0.8 + 0.7}{0.8 + 0.7} = 1.0 \qquad \cdots (4)$$

For example, when focusing on the calculation result of the formula (4), the implementation frequency P' (X3) is "1.0 (probability that POP is implemented is 100%). Therefore, it is possible to completely exclude a condition that X3 = 0 (POP is not implemented).

The information processing device 100 updates the period information 25 based on the updated implementation frequency information 20a and 20b. After updating the period information 25, the information processing device 100 repeatedly executes the above processing.

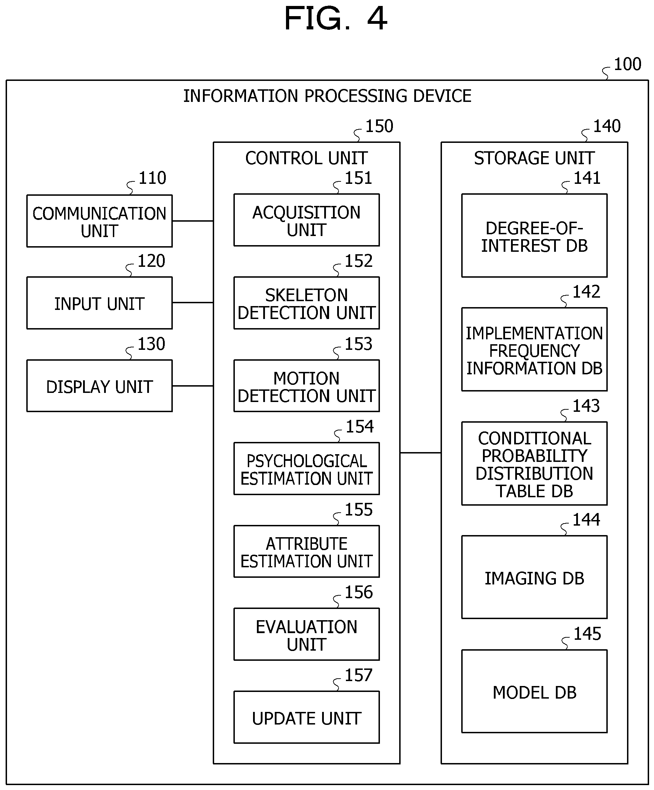

Next, a configuration example of the information processing device 100 that executes the above processing will be described. FIG. 4 is a functional block diagram illustrating the configuration of the information processing device according to the first embodiment. As illustrated in FIG. 4, the information processing device 100 includes a communication unit 110, an input unit 120, a display unit 130, a storage unit 140, and a control unit 150.

The communication unit 110 performs data communication with the camera 10, an external device, or the like via the network. The communication unit 110 is a network interface card (NIC) or the like. For example, the communication unit 110 receives the video data from the camera 10.

The input unit 120 is an input device that inputs various types of information into the control unit 150 of the information processing device 100.

The display unit 130 is a display device that displays information output from the control unit 150.

The storage unit 140 includes the degree-of-interest DB 141, an implementation frequency information DB 142, a conditional probability distribution table DB 143, an imaging DB 144, and a model DB 145. The storage unit 140 is a storage device such as a memory.

The degree-of-interest DB 141 is the degree-of-interest DB 141 described with reference to FIG. 3. The degree-of-interest DB 141 associates a date and time, a customer attribute, and X3, X2, and X1. Description regarding the date and time, the customer attribute, and X3, X2, and X1 is similar to the above description.

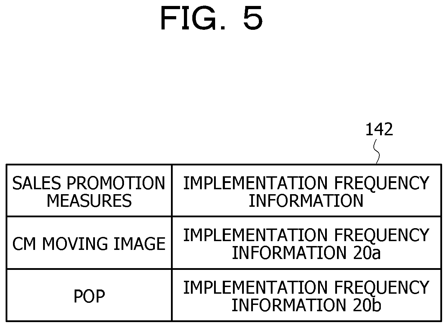

The implementation frequency information DB 142 holds the implementation frequency information of each sales promotion measure. FIG. 5 is a diagram illustrating an example of a data structure of the implementation frequency information DB according to the first embodiment. As illustrated in FIG. 5, the implementation frequency information DB 142 associates the sales promotion measures with the implementation frequency information. For example, the implementation frequency information corresponding to the sales promotion measures "CM moving image" corresponds to the implementation frequency information 20a illustrated in FIG. 2. The implementation frequency information corresponding to the sales promotion measures "POP" corresponds to the implementation frequency information 20b illustrated in FIG. 2. Although not described in FIG. 5, the implementation frequency information DB 142 may further hold implementation frequency information corresponding to other sales promotion measures.

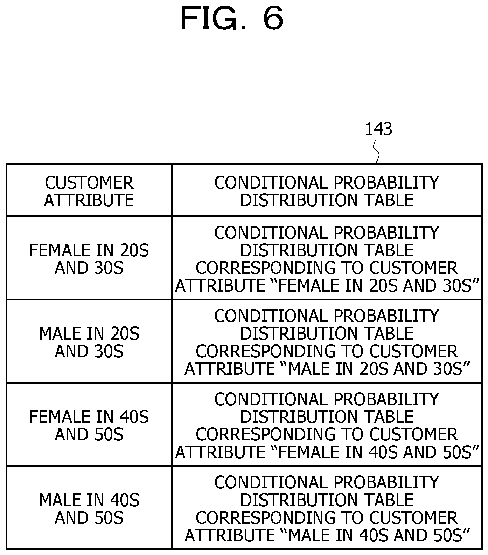

The conditional probability distribution table DB 143 holds a conditional probability distribution table of each customer attribute. FIG. 6 is a diagram illustrating an example of a data structure of the conditional probability distribution table DB according to the first embodiment. As illustrated in FIG. 6, the conditional probability distribution table DB 143 associates the customer attribute with the conditional probability distribution table. The customer attribute is an attribute of a customer whose degree of interest is specified and is a set of age and gender. The conditional probability distribution table includes X2, X3, P (X1 | X2, X3). Description regarding the conditional probability distribution table is similar to the description regarding the conditional probability distribution table in FIG. 3.

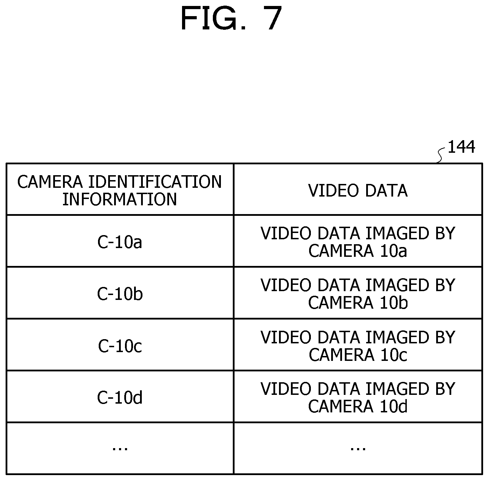

The imaging DB 144 holds the video data imaged by the camera 10. FIG. 7 is a diagram illustrating an example of a data structure of the imaging DB according to the first embodiment. As illustrated in FIG. 7, the imaging DB 144 associates the camera identification information with the video data. The camera identification information is information used to uniquely identify the camera 10. For example, pieces of camera identification information C-10a, C-10b, C-10c, and C-10d respectively correspond to the cameras 10a, 10b, 10c, and 10d. The video data is the video data imaged by the corresponding camera 10.

The model DB 145 includes a plurality of machine learning models used by the control unit 150. For example, the model DB 145 includes a first machine learning model, a second machine learning model, and a third machine learning model. The first machine learning model, the second machine learning model, and the third machine learning model are trained machine learning models and are neural networks (NN) or the like.

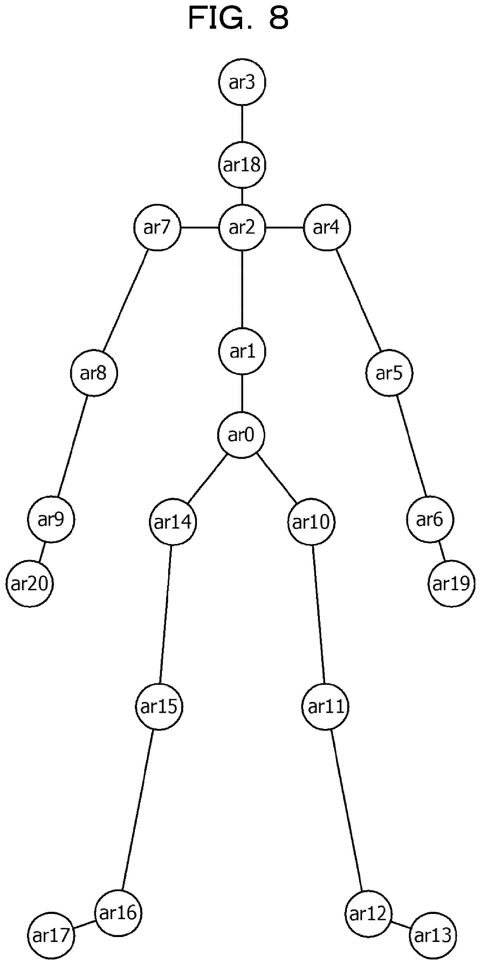

The first machine learning model is a model that outputs skeleton data of a person in a case where an image of the person is input. The skeleton data is data in which two-dimensional or three-dimensional coordinates are set to a plurality of joints defined by a skeleton model of a human body. FIG. 8 is a diagram illustrating an example of the skeleton model of the human body. For example, as illustrated in FIG. 8, the skeleton model of the human body is defined by 21 joints ar0 to ar20.

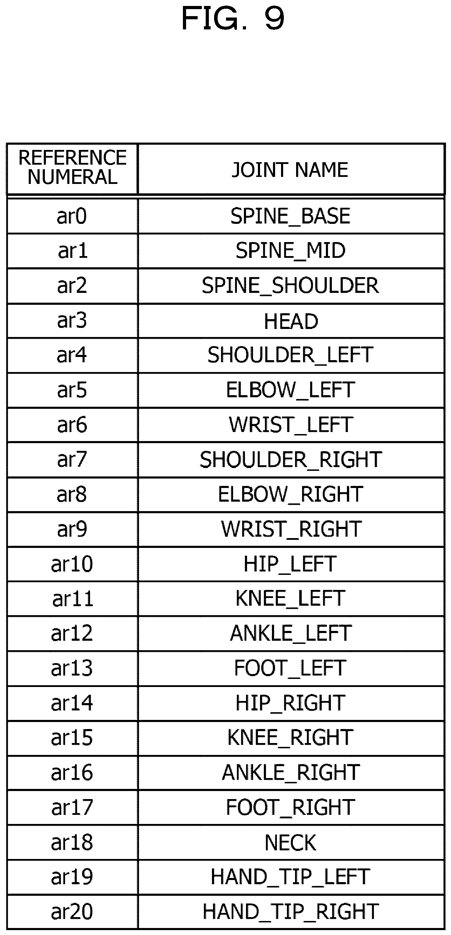

A relationship between each of the joints ar0 to ar20 illustrated in FIG. 8 and a joint name is as illustrated in FIG. 9. FIG. 9 is a diagram illustrating an example of the joint name. For example, the joint name of the joint ar0 is "SPINE_BASE". The joint names of the joints ar0 to a20 are as illustrated in FIG. 9, and description thereof is omitted.

The second machine learning model is a model that outputs a behavior type of the person in a case where the time-series skeleton data is input. For example, the behavior type of the person includes "walking", "stopping", "viewing product shelf", "viewing product", "stretching hand to product", or the like.

The third machine learning model is a model that outputs an attribute (age and gender) of the person in a case where the image of the person is input. Note that the third machine learning model may output other attributes, as the attribute of the person. The other attributes include an age, clothes, or the like of the person.

Subsequently, description proceeds to description of the control unit 150. The control unit 150 includes an acquisition unit 151, a skeleton detection unit 152, a motion detection unit 153, a psychological estimation unit 154, an attribute estimation unit 155, an evaluation unit 156, and an update unit 157. The control unit 150 is a central processing unit (CPU), a graphics processing unit (GPU), or the like.

The acquisition unit 151 acquires the video data from the camera 10. The acquisition unit 151 stores the acquired video data in the imaging DB 144, in association with the camera identification information of the camera.

The skeleton detection unit 152 acquires the video data from the imaging DB 144 and detects each person region (BoundingBox) from the time-series image frames included in the video data. The skeleton detection unit 152 generates the time-series skeleton data, by inputting an image of the time-series person region detected from the time-series image frames, into the first machine learning model. The skeleton detection unit 152 outputs the time-series skeleton data to the motion detection unit 153. It is assumed that the skeleton detection unit 152 set information regarding a time (date and time) included in an image frame to be a generation source of the skeleton data, to the skeleton data. The skeleton detection unit 152 repeatedly executes the above processing.

The motion detection unit 153 detects a behavior type of the person in a predetermined period, by dividing the time-series skeleton data for each predetermined period and inputting the time-series skeleton data in the predetermined period into the second machine learning model. The motion detection unit 153 outputs the behavior type of the person for each predetermined period to the psychological estimation unit 154, by repeatedly executing the above processing for each predetermined period. It is assumed that the motion detection unit 153 set information regarding the time (date and time) set to the skeleton data, to the behavior type of the person. The motion detection unit 153 repeatedly executes the above processing.

The psychological estimation unit 154 estimates whether or not the degree of interest is high, based on the behavior type of the person. For example, in a case where the behavior type of the person is a predetermined behavior type set in advance, the psychological estimation unit 154 estimates that the degree of interest is high. On the other hand, in a case where the behavior of the person is not the predetermined behavior type set in advance, the psychological estimation unit 154 estimates that the degree of interest is low.

For example, the predetermined behavior type set in advance is "stopping for five seconds or longer in front of product shelf", "viewing product five seconds or longer", "stretching hand to product", or the like. Note that, in a case where the behavior type "stopping" is continuously acquired a predetermined number of times, the psychological estimation unit 154 may estimate that the behavior type of the person is the predetermined behavior type. Similarly, in a case where the behavior type "viewing product" is continuously acquired the predetermined number of times, the psychological estimation unit 154 may estimate that the behavior type of the person is the predetermined behavior type.

Furthermore, the psychological estimation unit 154 may estimate whether or not the degree of interest is high, based on an estimation policy different from the above. The psychological estimation unit 154 estimates whether or not the degree of interest is high, as focusing on a transition of the behavior type. For example, in a case where the behavior type of the customer transitions in order of "stopping for five seconds or longer in front of product shelf" -> "viewing product for five seconds or longer" -> "stretching hand to product", the psychological estimation unit 154 estimates that the degree of interest is high.

The psychological estimation unit 154 generates degree-of-interest information, based on the above estimation result. The degree-of-interest information includes a date and time and information indicating whether or not the degree of interest is high. The psychological estimation unit 154 outputs the degree-of-interest information to the evaluation unit 156. The psychological estimation unit 154 repeatedly executes the above processing. The degree-of-interest information is an example of "purchase psychology information".

The attribute estimation unit 155 detects each person region (BoundingBox) from the time-series image frames included in the video data. The attribute estimation unit 155 estimates the customer attribute of the person by inputting the image of the person region into the third machine learning model. The attribute estimation unit 155 generates attribute information, based on the estimation result. The attribute information includes a date and time and a customer attribute. The attribute estimation unit 155 outputs the attribute information to the evaluation unit 156. The attribute estimation unit 155 repeatedly executes the above processing.

The evaluation unit 156 analyzes a change in the degree-of-interest information before and after the sales promotion measures, based on the period information of the sales promotion measures and evaluates the sales promotion measures based on the analyzed change. Hereinafter, an example of the processing of the evaluation unit 156 will be described.

The evaluation unit 156 generates the period information 25, based on the implementation frequency information of each sales promotion measure stored in the implementation frequency information DB 142. The processing for generating the period information 25 based on the implementation frequency information by the evaluation unit 156 corresponds to the processing described with reference to FIG. 2. The evaluation unit 156 specifies a period when each sales promotion measure is implemented, based on the period information 25. In a case where the implementation frequency information of each sales promotion measure stored in the implementation frequency information DB 142 is updated by the update unit 157 to be described later, the evaluation unit 156 generates the period information 25 again.

The evaluation unit 156 acquires the degree-of-interest information from the psychological estimation unit 154 and acquires the attribute information from the attribute estimation unit 155. The evaluation unit 156 generates a record to be registered in the degree-of-interest DB 141, based on the period information 25, the degree-of-interest information, and the attribute information. For example, the evaluation unit 156 associates the degree-of-interest information with the attribute information, using a date and time of the degree-of-interest information and a date and time of the attribute information as keys. The evaluation unit 156 specifies the values of X2 and X3, based on the date and time of the degree-of-interest information and the period information 25. In a case where information indicating that the degree of interest is high is set to the degree-of-interest information, the evaluation unit 156 sets "True" to X1. In a case where information indicating that the degree of interest is low is set to the degree-of-interest information, the evaluation unit 156 sets "False" to X1.

The evaluation unit 156 repeatedly registers the record in the degree-of-interest DB 141, by repeatedly executing the above processing.

Furthermore, the evaluation unit 156 calculates the conditional probability distribution table for each customer attribute, based on the degree-of-interest DB 141. The processing for generating the conditional probability distribution table by the evaluation unit 156 corresponds to the processing described with reference to FIG. 3. The evaluation unit 156 registers (update) the generated conditional probability distribution table in the conditional probability distribution table DB 143.

In a case where there is a significant difference in causality between the presence or absence of the sales promotion measures and the degree of interest, the evaluation unit 156 may output and display the generated conditional probability distribution table to and on the display unit 130. For example, in a case where a difference between a value of P (X1 = 1 | X2 = 0, X3 = 0) and a value of P (X1 = 1 | X2 = 1, X3 = 1) is equal to or more than the threshold, in the conditional probability distribution table 30 illustrated in FIG. 3, the evaluation unit 156 determines that there is a significant difference in the causality between the presence or absence of the sales promotion measures and the degree of interest. Note that the above determination criterion is an example, and the determination criterion is set in advance.

The update unit 157 updates the implementation frequency information of each sales promotion measure, based on the conditional probability distribution table registered in the conditional probability distribution table DB 143. By calculating a ratio of P (X1 | X2, X3) in a case where each of X2 and X3 is 1 (True), the update unit 157 calculates the implementation frequency of each sales promotion measure. The processing for calculating the ratio of P (X1 | X2, X3) in a case where each of X2 and X3 is 1 (True) by the update unit 157 is similar to the above description.

The update unit 157 updates the implementation frequency information of the implementation frequency information DB 142, based on the calculation result.

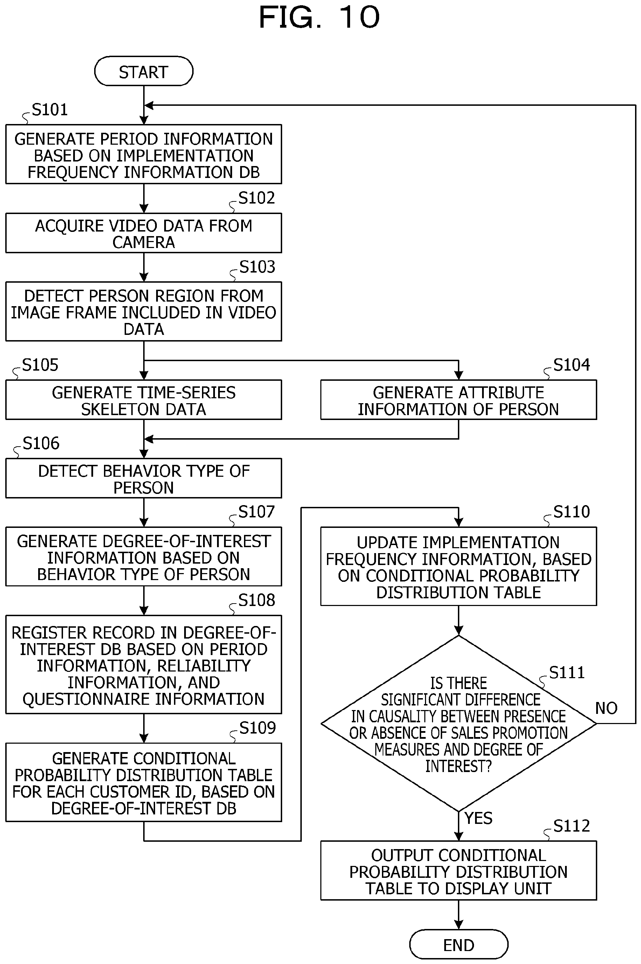

Next, an example of a processing procedure of the information processing device 100 according to the first embodiment will be described. FIG. 10 is a flowchart illustrating a processing procedure of the information processing device according to the first embodiment. As illustrated in FIG. 10, the evaluation unit 156 of the information processing device 100 generates the period information based on the implementation frequency information (step S101). The acquisition unit 151 of the information processing device 100 acquires the video data from the camera 10 (step S102).

The skeleton detection unit 152 and the attribute estimation unit 155 of the information processing device 100 detect the person region from image data included in the video data (step S103). The skeleton detection unit 152 generates the time-series skeleton data (step S105). The attribute estimation unit 155 generates the attribute information of the person (step S104).

The motion detection unit 153 of the information processing device 100 detects the behavior type of the person, based on the time-series skeleton data (step S106). The psychological estimation unit 154 generates the degree-of-interest information, based on the behavior type of the person (step S107).

The evaluation unit 156 of the information processing device 100 registers a record (information regarding date and time, customer attribute, X3, X2, and X1) in the degree-of-interest DB 141, based on the period information, the degree-of-interest information, and the attribute information (step S108). The evaluation unit 156 generates the conditional probability distribution table for each customer attribute, based on the degree-of-interest DB 141 (step S109).

The update unit 157 of the information processing device 100 updates the implementation frequency information, based on the conditional probability distribution table (step S110). In a case where there is no significant difference in the causality with the presence or absence of the sales promotion measures (step S111, No), the evaluation unit 156 proceeds the procedure to step S101.

On the other hand, in a case where there is a significant difference in the causality with the presence or absence of the sales promotion measures (step S111, Yes), the evaluation unit 156 outputs the conditional probability distribution table to the display unit 130 (step S112). Note that an administrator or the like of a store refers to the conditional probability distribution table output to the display unit 130 and adopts the sales promotion measures having the significant difference.

Next, effects of the information processing device 100 according to the first embodiment will be described. The information processing device 100 repeatedly executes the processing for specifying a behavior of the customer for purchasing the product by analyzing the video data imaged by the camera 10 and specifying the degree of interest according to the specified behavior. Furthermore, the information processing device 100 acquires the period information regarding the period when the sales promotion measures for the product are implemented and evaluates the sales promotion measures based on the change in the degree of interest before and after the sales promotion measures. As a result, it is possible to evaluate the effectiveness of the sales promotion measures. The administrator or the like of the store can perform effective sales promotion activities, by referring to the evaluation result.

The information processing device 100 generates the degree-of-interest information, based on the specified behavior type. As a result, it is possible to generate the information regarding the degree of interest based on a psychological change leading to purchase.

The information processing device 100 specifies a customer's behavior for staying in front of the product shelf, based on the specified behavior and generates the degree-of-interest information, based on a time when the person is staying in front of the product shelf. As a result, it is possible to generate information regarding a degree of interest according to a stay time.

The information processing device 100 generates the conditional probability distribution table for each customer attribute, based on the degree-of-interest DB 141 and evaluates the sales promotion measures, based on the conditional probability distribution table. As a result, it is possible to evaluate the effectiveness of the sales promotion measures for each customer attribute.

[Second Embodiment]

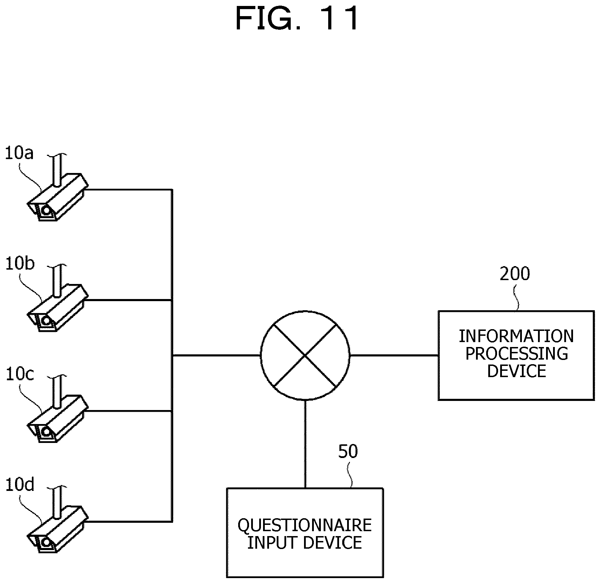

Next, a system according to a second embodiment will be described. FIG. 11 is a diagram illustrating an example of the system according to the second embodiment. As illustrated in FIG. 11, this system includes cameras 10a to 10d, a questionnaire input device 50, and an information processing device 200. The cameras 10a to 10d, the questionnaire input device 50, and the information processing device 200 are coupled to each other via a network.

The camera 10 images a video in a store and transmits data of the imaged video to the information processing device 200. Other description regarding the camera 10 is similar to the description regarding the camera 10 described in the first embodiment.

The questionnaire input device 50 is a device used to input a questionnaire for a predetermined product by a customer. In the second embodiment, as an example, content of the questionnaire is set as content to select whether or not a product A is preferred. The customer operates the questionnaire input device 50, selects whether or not the product A is preferred, and presses a completion button or the like set to the questionnaire input device 50.

For example, a camera is installed in the questionnaire input device 50. In a case where the completion button is pressed by the customer, the questionnaire input device 50 captures an image of the customer, generates questionnaire information including image information of the customer and an input result of the questionnaire, and transmits the questionnaire information to the information processing device 200.

The information processing device 200 specifies a behavior of the customer for purchasing the product for each customer, by analyzing the video data imaged by the camera 10 and specifies a reliability according to the specified behavior. Furthermore, the information processing device 200 acquires the questionnaire information from the questionnaire input device 50 and estimates a subjective reliability of the customer for the product, for each customer, based on the questionnaire information. The information processing device 200 specifies an average value of the reliability according to the behavior of the customer and the reliability based on the questionnaire information, for each customer, as the reliability for the product. Then, the information processing device 200 acquires period information regarding a period when sales promotion measures for the product are implemented and evaluates the sales promotion measures based on a change in the reliability before and after the sales promotion measures. As a result, it is possible to evaluate the effectiveness of the sales promotion measures.

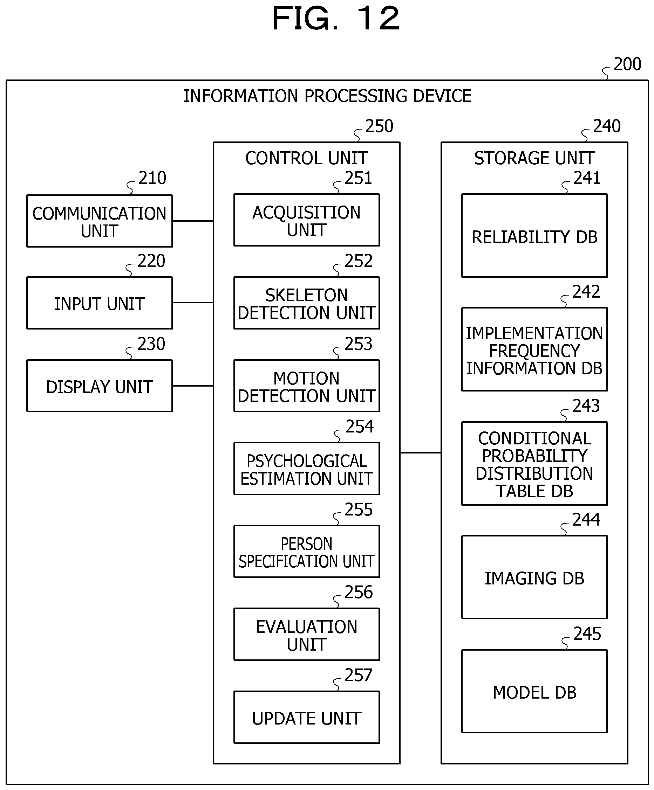

Next, a configuration example of the information processing device 200 according to the second embodiment will be described. FIG. 12 is a functional block diagram illustrating the configuration of the information processing device according to the second embodiment. As illustrated in FIG. 12, the information processing device 200 includes a communication unit 210, an input unit 220, a display unit 230, a storage unit 240, and a control unit 250.

The communication unit 210 performs data communication with the camera 10, the questionnaire input device 50, an external device, or the like via the network. The communication unit 210 is an NIC or the like. For example, the communication unit 210 receives the video data from the camera 10.

The input unit 220 is an input device that inputs various types of information into the control unit 250 of the information processing device 200.

The display unit 230 is a display device that displays information output from the control unit 250.

The storage unit 240 includes a reliability DB 241, an implementation frequency information DB 242, a conditional probability distribution table DB 243, an imaging DB 244, and a model DB 245. The storage unit 240 is a storage unit such as a memory.

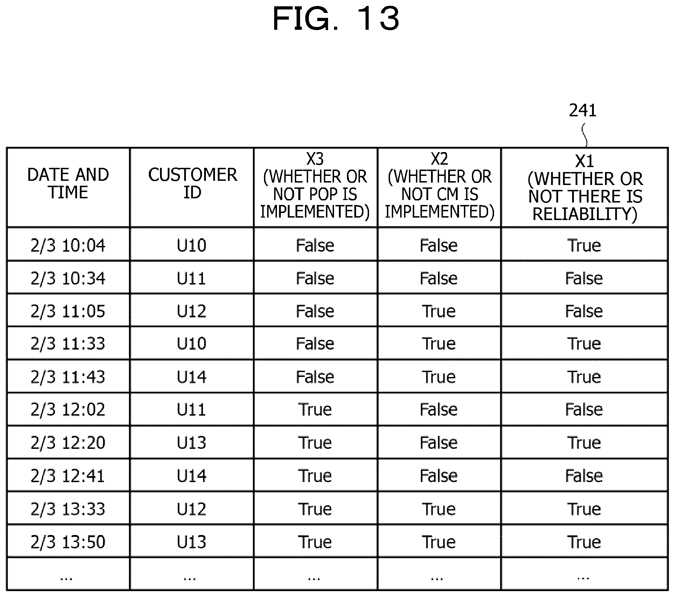

The reliability DB 241 holds various types of information regarding a reliability of a customer. FIG. 13 is a diagram illustrating an example of a data structure of the reliability DB. As illustrated in FIG. 13, the reliability DB 241 associates a date and time, a customer identification (ID), X3, X2, and X1. Description regarding the date and time, X3, and X2 is similar to content described in the first embodiment. The customer ID is information used to uniquely identify the customer. In the reliability DB 241, X1 indicates whether or not the reliability is high. For example, in a case where the reliability is equal to or higher than a threshold, X1 is "True". In a case where the reliability is less than the threshold, X1 is "False".

The implementation frequency information DB 242 holds implementation frequency information of each sales promotion measure. A data structure of the implementation frequency information DB 242 is similar to the data structure of the implementation frequency information DB 142 described with reference to FIG. 5.

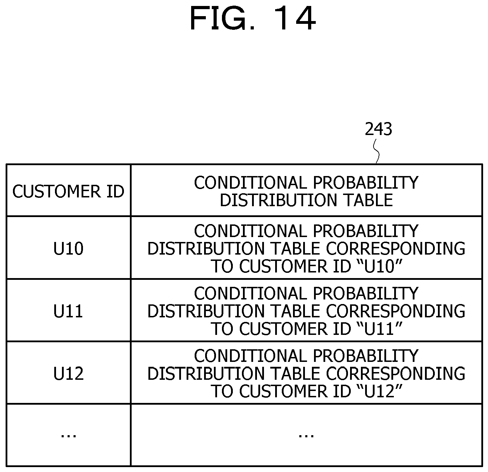

The conditional probability distribution table DB 243 holds a conditional probability distribution table of each customer ID. FIG. 14 is a diagram illustrating an example of a data structure of the conditional probability distribution table DB according to the second embodiment. As illustrated in FIG. 14, the conditional probability distribution table DB 243 associates the customer ID with the conditional probability distribution table. The customer ID is information used to identify a customer whose reliability is specified. The conditional probability distribution table includes X2, X3, P (X1 | X2, X3). Description regarding the conditional probability distribution table is similar to the description regarding the conditional probability distribution table in FIG. 3 in the first embodiment.

The imaging DB 244 holds the video data imaged by the camera 10. A data structure of the imaging DB 244 is similar to the data structure of the imaging DB 144 described with reference to FIG. 7.

The model DB 245 includes a plurality of machine learning models used by the control unit 250. For example, the model DB 245 includes a first machine learning model and a second machine learning model. Description regarding the first machine learning model and the second machine learning model is similar to content described in the first embodiment.

Subsequently, description proceeds to description of the control unit 250. The control unit 250 includes an acquisition unit 251, a skeleton detection unit 252, a motion detection unit 253, a psychological estimation unit 254, a person specification unit 255, an evaluation unit 256, and an update unit 257. The control unit 250 is a CPU, a GPU, or the like.

The acquisition unit 251 acquires the video data from the camera 10. The acquisition unit 251 stores the acquired video data in the imaging DB 244, in association with camera identification information of the camera.

The skeleton detection unit 252 acquires the video data from the imaging DB 244 and generates time-series skeleton data based on the video data. The skeleton detection unit 252 outputs the time-series skeleton data to the motion detection unit 253. Other description regarding the skeleton detection unit 252 is similar to the description of the skeleton detection unit 152 in the first embodiment.

The motion detection unit 253 detects a behavior type of a person in a predetermined period, by dividing the time-series skeleton data for each predetermined period and inputting the time-series skeleton data in the predetermined period into the second machine learning model. The motion detection unit 253 outputs the behavior type of the person for each predetermined period to the evaluation unit 256, by repeatedly executing the above processing for each predetermined period. Other description regarding the motion detection unit 253 is similar to the description of the motion detection unit 153 in the first embodiment.

The person specification unit 255 acquires the video data from the imaging DB 244, detects each person region from time-series image frames included in the video data, and assigns the same customer ID to the same customer by tracking or the like. The person specification unit 255 outputs the set customer ID to the psychological estimation unit 254. The person specification unit 255 may output the set customer ID to the psychological estimation unit 254, in association with a frame number of the image frame, the camera identification information, and the customer ID.

Furthermore, the person specification unit 255 acquires the questionnaire information including the image of the customer and specifies the customer ID of the customer who has input the questionnaire information, based on a feature of the image of the questionnaire information and a feature of the person region to which the customer ID is assigned. The person specification unit 255 sets the specified customer ID to the questionnaire information and outputs the questionnaire information to which the customer ID is set, to the evaluation unit 256. Note that, in the second embodiment, a case has been described where the person specification unit 255 specifies the customer ID corresponding to the questionnaire information. However, the customer ID corresponding to the questionnaire information may be set, using other known techniques.

The psychological estimation unit 254 estimates whether or not the reliability is high, based on the behavior type of the person corresponding to the customer ID. For example, the psychological estimation unit 254 counts the cumulative number of times when the person corresponding to the customer ID stretches the hand to the product A, in a predetermined period. In a case where the counted cumulative number of times is equal to or more than a threshold, the psychological estimation unit 254 estimates that the reliability is high. On the other hand, in a case where the cumulative number of times is less than the threshold, the psychological estimation unit 254 estimates that the reliability is high.

The psychological estimation unit 254 generates reliability information, based on the above estimation result. The reliability information includes a date and time, a customer ID, and information indicating whether or not the reliability is high. The psychological estimation unit 254 outputs the reliability information to the evaluation unit 256. The psychological estimation unit 254 repeatedly executes the above processing. The reliability information is an example of "purchase psychology information".

The evaluation unit 256 analyzes a change in the reliability information before and after the sales promotion measures, based on the period information of the sales promotion measures and evaluates the sales promotion measures, based on the analyzed change. Hereinafter, an example of the processing of the evaluation unit 256 will be described.

The evaluation unit 256 generates period information 25, based on the implementation frequency information of each sales promotion measure stored in the implementation frequency information DB 242. The processing for generating the period information 25, based on the implementation frequency information, by the evaluation unit 256 is similar to the processing executed by the evaluation unit 156 described in the first embodiment.

The evaluation unit 256 acquires the reliability information from the psychological estimation unit 254, and acquires the questionnaire information from the person specification unit 255. The evaluation unit 256 adjusts a reliability, based on the reliability information and the questionnaire information, for the same customer ID. For example, in a case where the high reliability is set in the reliability information and a preference of the product A is set in the questionnaire information, the evaluation unit 256 sets "True" to the reliability corresponding to the customer ID. On the other hand, in a case where the reliability is low in the reliability information or in a case where it is set that the product A is not preferred in the questionnaire information, the evaluation unit 256 sets "False" to the reliability corresponding to the customer ID.

Note that, in a case where the reliability in the reliability information or a preference degree of the product A by the customer in the questionnaire information is set as a numerical value, the evaluation unit 256 may execute the following processing. The evaluation unit 256 calculates an average value of the numerical values of the reliability and the preference degree of the product A, and in a case where the average value is equal to or more than the threshold, the evaluation unit 256 sets "True" to the reliability corresponding to the customer ID. In a case where the average value is less than the threshold, the evaluation unit 256 sets "False" to the reliability corresponding to the customer ID.

The evaluation unit 256 generates a record to be registered in the reliability DB 241, based on the period information 25, the adjusted reliability, and the reliability information. The evaluation unit 256 specifies the values of X2 and X3, based on the date and time of the reliability information and the period information 25. The evaluation unit 256 sets a value corresponding to the adjusted reliability to X1.

The evaluation unit 256 repeatedly registers the record in the reliability DB 241, by repeatedly executing the above processing.

Furthermore, the evaluation unit 256 calculates the conditional probability distribution table for each customer ID, based on the reliability DB 241. The processing for generating the conditional probability distribution table by the evaluation unit 256 corresponds to the processing described with reference to FIG. 3. Note that it is assumed that the processing of the evaluation unit 256 replace each customer attribute described in FIG. 3 with each customer ID. The evaluation unit 256 registers (update) the generated conditional probability distribution table in the conditional probability distribution table DB 243.

In a case where there is a significant difference in the causality between the presence or absence of the sales promotion measures and the degree of interest, the evaluation unit 256 may output and display the generated conditional probability distribution table to and on the display unit 230. For example, in a case where a difference between a value of P $(X1 = 1 \mid X2 = 0, X3 = 0)$ and a value of P $(X1 = 1 \mid X2 = 1, X3 = 1)$ is equal to or more than the threshold, the evaluation unit 256 determines that there is a significant difference in the causality between the presence or absence of the sales promotion measures and the degree of interest. Note that the above determination criterion is an example, and the determination criterion is set in advance.

The update unit 257 updates the implementation frequency information of each sales promotion measure, based on the conditional probability distribution table registered in the conditional probability distribution table DB 243. Processing of the update unit 257 corresponds to the processing of the update unit 157. Note that it is assumed that the processing of the update unit 257 replace each customer attribute described in FIG. 3 with each customer ID.

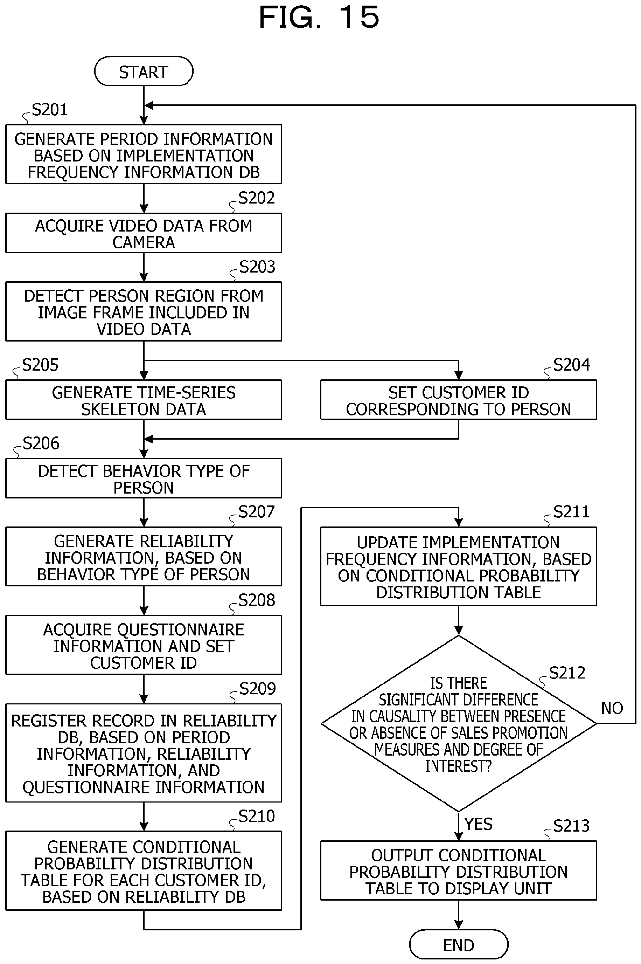

Next, an example of a processing procedure of the information processing devices 200 according to the second embodiment will be described. FIG. 15 is a flowchart illustrating the processing procedure of the information processing device according to the second embodiment. As illustrated in FIG. 15, the evaluation unit 256 of the information processing device 200 generates the period information, based on the implementation frequency information (step S201). The acquisition unit 251 of the information processing device 200 acquires the video data from the camera 10 (step S202).

The skeleton detection unit 152 and the person specification unit 255 of the information processing device 200 detect the person region from image data included in the video data (step S203). The skeleton detection unit 252 generates the time-series skeleton data (step S205). The person specification unit 255 sets the customer ID for the person (step S204).

The motion detection unit 253 of the information processing device 200 detects the behavior type of the person, based on the time-series skeleton data (step S206). The psychological estimation unit 254 generates the reliability information, based on the behavior type of the person (step S207). The information processing device 200 acquires the questionnaire information from the questionnaire input device 50 and sets the customer ID (step S208).

The evaluation unit 256 of the information processing device 200 registers the record (information regarding date and time, customer ID, X3, X2, and X1) in the reliability DB 241, based on the period information, the reliability information, and the questionnaire information (step S209). The evaluation unit 256 generates the conditional probability distribution table for each customer ID, based on the reliability DB 241 (step S210).

The update unit 257 of the information processing device 200 updates the implementation frequency information, based on the conditional probability distribution table (step S211). In a case where there is no significant difference in the causality with the presence or absence of the sales promotion measures (step S212, No), the evaluation unit 256 proceeds the procedure to step S201.

On the other hand, in a case where there is a significant difference in the causality with the presence or absence of the sales promotion measures (step S212, Yes), the evaluation unit 256 outputs the conditional probability distribution table to the display unit 230 (step S213). Note that an administrator or the like of a store refers to the conditional probability distribution table output to the display unit 230 and adopts the sales promotion measures having the significant difference.

Next, effects of the information processing device 200 according to the second embodiment will be described. The information processing device 200 specifies the behavior of the customer for purchasing the product for each customer ID, by analyzing the video data imaged by the camera 10 and specifies the reliability according to the specified behavior. Furthermore, the information processing device 200 acquires the questionnaire information from the questionnaire input device 50 and estimates the subjective reliability of the customer, for each customer ID, based on the questionnaire information. The information processing device 200 specifies a value adjusted based on the reliability according to the behavior of the customer and the reliability based on the questionnaire information, for each customer ID, as the reliability for the product. Then, the information processing device 200 acquires period information regarding a period when sales promotion measures for the product are implemented and evaluates the sales promotion measures based on a change in the reliability before and after the sales promotion measures. As a result, it is possible to evaluate the effectiveness of the sales promotion measures, for each customer.

[Third Embodiment]

Next, a system according to a third embodiment will be described. Since the system according to the third embodiment is similar to the system described with reference to FIG. 1, description is omitted. An information processing device according to the third embodiment is referred to as an "information processing device 300". The information processing device 300 is coupled to cameras 10a to 10d, via a network. In the following description, the cameras 10a to 10d are collectively referred to as a camera 10.

The camera 10 images a video in a store and transmits data of the imaged video to the information processing device 300. Description regarding the camera 10 is similar to the description regarding the camera 10 above.

In the above first embodiment, the POP and the CM moving image have been implemented as the sales promotion measures. However, in the third embodiment, the sales promotion measures are set as CM moving images of a plurality of products. The information processing device 300 repeatedly executes processing for specifying a behavior of a customer for purchasing the product by analyzing the video data imaged by the camera 10 and specifying a degree of interest according to the specified behavior. Furthermore, the information processing device 300 acquires period information regarding a period when the sales promotion measures for each CM moving image are implemented and evaluates the sales promotion measures based on a change in the degree of interest before and after the sales promotion measures. As a result, it is possible to evaluate the effectiveness of the sales promotion measures by each CM moving image and to compare which CM moving image of which product is the most effective.

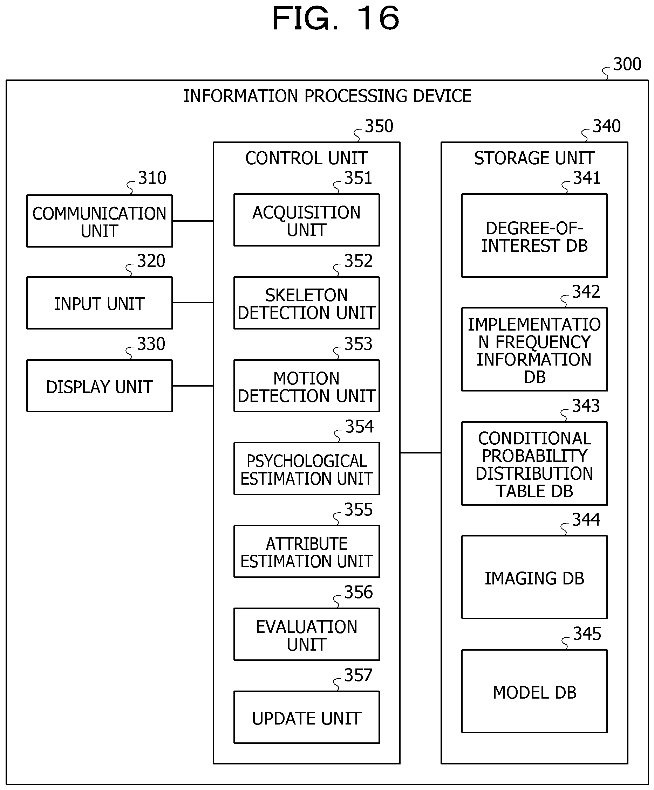

Subsequently, a configuration example of the information processing device 300 according to the third embodiment will be described. FIG. 16 is a functional block diagram illustrating a configuration of the information processing device according to the third embodiment. As illustrated in FIG. 16, the information processing device 300 includes a communication unit 310, an input unit 320, a display unit 330, a storage unit 340, and a control unit 350.

The communication unit 310 performs data communication with the camera 10, an external device, or the like, via the network. The communication unit 310 is an NIC or the like. For example, the communication unit 310 receives the video data from the camera 10.

The input unit 320 is an input device that inputs various types of information into the control unit 350 of the information processing device 300.

The display unit 330 is a display device that displays information output from the control unit 350.

The storage unit 340 includes a degree-of-interest DB 341, an implementation frequency information DB 342, a conditional probability distribution table DB 343, an imaging DB 344, and a model DB 345. The storage unit 340 is a storage unit such as a memory.

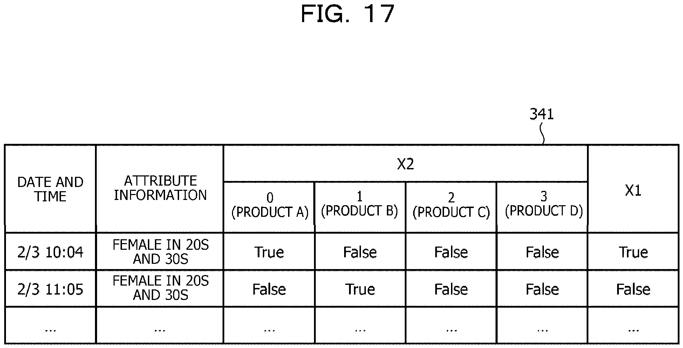

The degree-of-interest DB 341 holds information regarding a degree of interest of a customer. FIG. 17 is a diagram illustrating an example of a data structure of the degree-of-interest DB according to the third embodiment. As illustrated in FIG. 17, the degree-of-interest DB 341 includes a date and time, a customer attribute, X2, and X1. In FIG. 17, description regarding the date and time, the customer attribute, and X1 is similar to the description regarding the date and time, the customer attribute, and X1 described with reference to FIG. 3.

A value of zero to three is set to X2. X2 = 0 indicates a product A. At a date and time when a CM moving image of the product A is implemented, "True" is set to a cell of a record corresponding to X2 = 0. At a date and time when the CM moving image of the product A is not implemented, "False" is set to the cell of the record corresponding to X2 = 0. X2 = 1 indicates a product B. At a date and time when a CM moving image of the product B is implemented, "True" is set to a cell of a record corresponding to X2 = 1. At a date and time when the CM moving image of the product B is not implemented, "False" is set to the cell of the record corresponding to X2 = 1.

X2 = 2 indicates a product C. At a date and time when a CM moving image of the product C is implemented, "True" is set to a cell of a record corresponding to X2 = 2. At a date and time when the CM moving image of the product C is not implemented, "False" is set to the cell of the record corresponding to X2 = 2. X2 = 3 indicates a product D. At a date and time when a CM moving image of the product D is implemented, "True" is set to a cell of a record corresponding to X2 = 3. At a date and time when the CM moving image of the product D is not implemented, "False" is set to the cell of the record corresponding to X2 = 3.

In the degree-of-interest DB 341 in FIG. 17, a record in a first row indicates that the CM moving image of the sales promotion measures X2 = 0 (product A) is implemented and the CM moving images of the sales promotion measures X2 = 1 to 3 (products B to D) are not implemented, at a date and time "2/3 10:04". Furthermore, it is indicated that a customer attribute "female in 20s and 30s" is interested in the product, at the date and time "2/3 10:04".

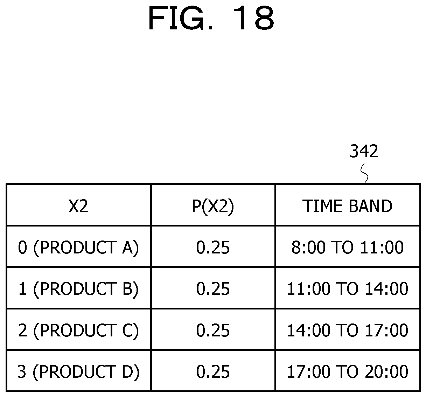

The implementation frequency information DB 342 holds the implementation frequency information of each sales promotion measure. FIG. 18 is a diagram illustrating an example of a data structure of the implementation frequency information DB according to the third embodiment. As illustrated in FIG. 18, the implementation frequency information DB 342 associates X2, P (X2), and a time band. Description regarding X2 is similar to the description in FIG. 17. P (X2) indicates a probability that each of the sales promotion measures is implemented. P (X1 = 0) is a probability that the CM moving image of the product A is implemented. P (X1 = 1) is a probability that the CM moving image of the product B is implemented. P (X1 = 2) is a probability that the CM moving image of the product C is implemented. P (X1 = 3) is a probability that the CM moving image of the product D is implemented. The time band indicates a time band when the sales promotion measures are implemented (recommended).

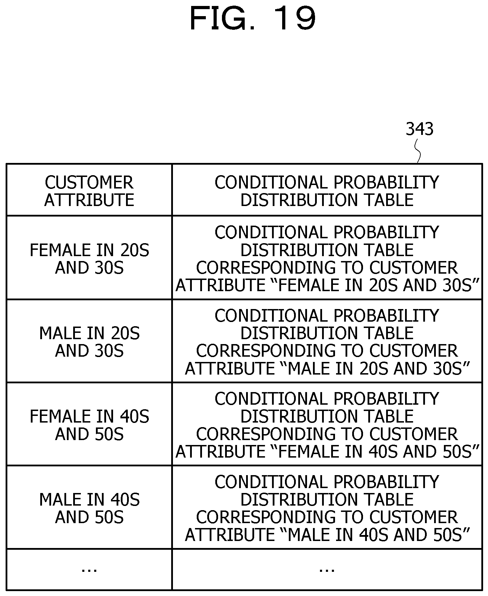

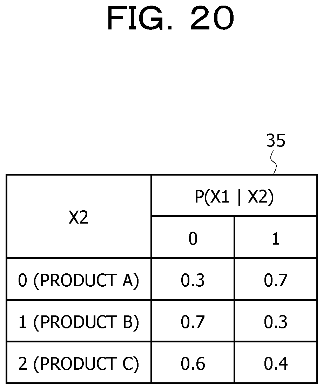

The conditional probability distribution table DB 343 holds the conditional probability distribution table for each customer attribute. FIG. 19 is a diagram illustrating an example of a data structure of the conditional probability distribution table DB according to the third embodiment. As illustrated in FIG. 19, the conditional probability distribution table DB 343 associates the customer attribute with the conditional probability distribution table. The customer attribute is an attribute of a customer whose degree of interest is specified and is a set of age and gender. The conditional probability distribution table includes X2 and P (X1 | X2). An example of the conditional probability distribution table will be described below with reference to FIG. 20.

FIG. 20 is a diagram illustrating an example of the conditional probability distribution table according to the third embodiment. A conditional probability distribution table 35 is a conditional probability distribution table corresponding to a certain customer attribute (for example, female in 20s and 30s). The conditional probability distribution table 35 includes X2 and P (X1 | X2). Description regarding X1 and X2 is similar to the above description. P (X1 | X2) is a probability of an event X1, under a condition that an event X2 occurs.

A record in a first row in the conditional probability distribution table 35 indicates that the probability that the degree of interest of the customer is less than the threshold is "0.3 (30%, the same applies below)", under a condition that X2 = 0 (product A) is "True (implemented)". Furthermore, it is indicated that the probability that the degree of interest of the customer is equal to or more than the threshold is "0.7", under the condition that X2 = 0 (product A) is "True (implemented)".

A record in a second row in the conditional probability distribution table 35 indicates that a probability that the degree of interest of the customer is less than the threshold is "0.7", under a condition that X2 = 1 (product B) is "True (implemented)". Furthermore, it is indicated that the probability that the degree of interest of the customer is equal to or more than the threshold is "0.3", under the condition that X2 = 1 (product B) is "True (implemented)".

A record in a third row in the conditional probability distribution table 35 indicates that the probability that the degree of interest of the customer is less than the threshold is °0.6", under a condition that X2 = 2 (product C) is "True (implemented)". Furthermore, it is indicated that the probability that the degree of interest of the customer is equal to or more than the threshold is "0.4", under the condition that X2 = 2 (product C) is "True (implemented)".

A record in a fourth row in the conditional probability distribution table 35 indicates that the probability that the degree of interest of the customer is less than the threshold is "0.4", under a condition that X2 = 3 (product D) is "True (implemented)". Furthermore, it is indicated that the probability that the degree of interest of the customer is equal to or more than the threshold is "0.6", under the condition that X2 = 3 (product D) is "True (implemented)".

The description returns to the description of FIG. 16. The imaging DB 344 holds the video data imaged by the camera 10. A data structure of the imaging DB 344 is similar to the data structure of the imaging DB 144 described with reference to FIG. 7.

The model DB 345 includes a plurality of machine learning models used by the control unit 350. For example, the model DB 345 includes a first machine learning model, a second machine learning model, and a third machine learning model. Description regarding the first machine learning model, the second machine learning model, and the third machine learning model is similar to the description regarding the first machine learning model, the second machine learning model, and the third machine learning model described in the first embodiment.

Subsequently, description proceeds to description of the control unit 350. The control unit 350 includes an acquisition unit 351, a skeleton detection unit 352, a motion detection unit 353, a psychological estimation unit 354, an attribute estimation unit 355, an evaluation unit 356, and an update unit 357. The control unit 350 is a CPU, a GPU, or the like.

The acquisition unit 351 acquires the video data from the camera 10. The acquisition unit 351 stores the acquired video data in the imaging DB 344, in association with camera identification information of the camera.

The skeleton detection unit 352 acquires the video data from the imaging DB 344 and generates time-series skeleton data based on the video data. The skeleton detection unit 352 outputs the time-series skeleton data to the motion detection unit 353. Other description regarding the skeleton detection unit 352 is similar to the description of the skeleton detection unit 152 in the first embodiment.

The motion detection unit 353 detects a behavior type of a person in a predetermined period, by dividing the time-series skeleton data for each predetermined period and inputting the time-series skeleton data in the predetermined period into the second machine learning model. The motion detection unit 353 outputs the behavior type of the person for each predetermined period to the evaluation unit 356, by repeatedly executing the above processing for each predetermined period. Other description regarding the motion detection unit 353 is similar to the description of the motion detection unit 153 in the first embodiment.

The psychological estimation unit 354 estimates whether or not the degree of interest is high, based on the behavior type of the person. For example, in a case where the behavior type of the person is a predetermined behavior type set in advance, the psychological estimation unit 354 estimates that the degree of interest is high. On the other hand, in a case where the behavior of the person is not the predetermined behavior type set in advance, the psychological estimation unit 354 estimates that the degree of interest is low.

The psychological estimation unit 354 generates degree-of-interest information, based on the above estimation result. The degree-of-interest information includes a date and time and information indicating whether or not the degree of interest is high. The psychological estimation unit 354 outputs the degree-of-interest information to the evaluation unit 356. The psychological estimation unit 354 repeatedly executes the above processing. The degree-of-interest information is an example of "purchase psychology information". Other description regarding the psychological estimation unit 354 is similar to the description regarding the psychological estimation unit 154 described in the first embodiment.

The attribute estimation unit 355 detects each person region from time-series image frames included in the video data. The attribute estimation unit 355 estimates the customer attribute of the person by inputting an image of the person region into the third machine learning model. The attribute estimation unit 355 generates attribute information, based on the estimation result. The attribute information includes a date and time and a customer attribute. The attribute estimation unit 355 outputs the attribute information to the evaluation unit 356. The attribute estimation unit 355 repeatedly executes the above processing. Other description regarding the attribute estimation unit 355 is similar to the description regarding the attribute estimation unit 155 described in the first embodiment.

The evaluation unit 356 analyzes a change in the degree-of-interest information before and after the sales promotion measures, based on the period information of the sales promotion measures of each CM moving image and evaluates the sales promotion measures based on the analyzed change. Hereinafter, an example of the processing of the evaluation unit 356 will be described.

The evaluation unit 356 uses the time band of the implementation frequency information of each sales promotion measure stored in the implementation frequency information DB 342, as the period information. The evaluation unit 356 may generate the period information, based on P (X2). The evaluation unit 356 specifies a period when each sales promotion measure is implemented, based on the period information 25. In a case where the implementation frequency information of each sales promotion measure stored in the implementation frequency information DB 342 is updated by the update unit 357 to be described later, the evaluation unit 356 may generate the period information again.

The evaluation unit 356 acquires the degree-of-interest information from the psychological estimation unit 354 and acquires the attribute information from the attribute estimation unit 355. The evaluation unit 356 generates a record to be registered in the degree-of-interest DB 341, based on the period information, the degree-of-interest information, and the attribute information. For example, the evaluation unit 356 associates the degree-of-interest information with the attribute information, using a date and time of the degree-of-interest information and a date and time of the attribute information as keys. The evaluation unit 356 specifies values of X2 = 0 to 3 (True or False), based on the date and time of the degree-of-interest information and the period information. In a case where information indicating that the degree of interest is high is set to the degree-of-interest information, the evaluation unit 356 sets "True" to X1. On the other hand, in a case where information indicating that the degree of interest is low is set to the degree-of-interest information, the evaluation unit 356 sets "False" to X1.

The evaluation unit 356 repeatedly registers the record in the degree-of-interest DB 341, by repeatedly executing the above processing.

Furthermore, the evaluation unit 356 calculates the conditional probability distribution table for each customer attribute, based on the degree-of-interest DB 341. For example, a conditional probability table of the customer attribute "female in 20s and 30s" is the conditional probability distribution table 35 illustrated in FIG. 20. In a case of generating the conditional probability distribution table 35, the evaluation unit 356 uses a record of the customer attribute "females in 20s and 30s", among the records of the degree-of-interest DB 341.

The evaluation unit 356 extracts records in which X2 = 0 (product A) is "True", among the records of the customer attribute "female in 20s and 30s" and sets a ratio of the records in which X1 = True, among the extracted records to a cell of P (X1 = 1 | X2) corresponding to X2 = 0 (0.7 in FIG. 20). The evaluation unit 356 extracts the records in which X2 = 0 (product A) is "True", among the records of the customer attribute "female in 20s and 30s" and sets a ratio of the records in which X1 = False, among the extracted records to a cell of P (X1 = 0 | X2) corresponding to X2 = 0

(0.3 in FIG. 20).

The evaluation unit 356 extracts records in which X2 = 1 (product B) is "True", among the records of the customer attribute "female in 20s and 30s" and sets a ratio of the records in which X1 = True, among the extracted records to a cell of P (X1 = 1 | X2) corresponding to X2 = 1 (0.3 in FIG. 20). The evaluation unit 356 extracts the records in which X2 = 1 (product B) is "True", among the records of the customer attribute "female in 20s and 30s" and sets a ratio of the records in which X1 = False, among the extracted records to a cell of P (X1 = 0 | X2) corresponding to X2 = 1

(0.7 in FIG. 20).

The evaluation unit 356 extracts records in which X2 = 2 (product C) is "True", among the records of the customer attribute "female in 20s and 30s" and sets a ratio of the records in which X1 = True, among the extracted records to a cell of P (X1 = 1 | X2) corresponding to X2 = 2 (0.4 in FIG. 20). The evaluation unit 356 extracts the records in which X2 = 2 (product C) is "True", among the records of the customer attribute "female in 20s and 30s" and sets a ratio of the records in which X1 = False, among the extracted records to a cell of P (X1 = 0 | X2) corresponding to X2 = 2

(0.6 in FIG. 20).

The evaluation unit 356 extracts records in which X2 = 3 (product D) is "True", among the records of the customer attribute "female in 20s and 30s" and sets a ratio of the records in which X1 = True, among the extracted records to a cell of P (X1 = 1 | X2) corresponding to X2 = 3 (0.6 in FIG. 20). The evaluation unit 356 extracts the records in which X2 = 3 (product D) is "True", among the records of the customer attribute "female in 20s and 30s" and sets a ratio of the records in which X1 = False, among the extracted records to a cell of P (X1 = 0 | X2) corresponding to X2 = 3

(0.4 in FIG. 20).

Although the conditional probability distribution table 35 of the customer attribute "female in 20s and 30s" is illustrated in FIG. 20, the evaluation unit 356 similarly generates conditional probability distribution tables of other customer attributes. The evaluation unit 356 registers (update) the conditional probability distribution table of each customer attribute in the conditional probability distribution table DB 343.

The conditional probability distribution table 35 generated by the evaluation unit 356 is an evaluation result of the effectiveness of the sales promotion measures. For example, if the values of P (X1 = 1 | X2) for X2 = 0 to 3 in the conditional probability distribution table 35 are compared, the value of P (X1 = 1 | X2) for X2 = 0 is the maximum (0.7). Therefore, it is found that implementing X2 = 0 (product A) is the most effective.

In a case where there is a significant difference in the causality between the presence or absence of the sales promotion measures and the degree of interest, the evaluation unit 356 may output and display the generated conditional probability distribution table to and on the display unit 330. For example, the evaluation unit 356 compares the values of P (X1 = 1 | X2) in the conditional probability distribution table 35 illustrated in FIG. 20, and in a case where a difference between the maximum value of P (X1 = 1 | X2) and the minimum value of P (X1 = 1 | X2) is equal to or larger than the threshold, the evaluation unit 356 determines that there is the significant difference in the causality between the presence or absence of the sales promotion measures and the degree of interest. Note that the above determination criterion is an example, and the determination criterion is set in advance.

After the conditional probability distribution table is generated by the evaluation unit 356, the update unit 357 updates P (X2) and the time band of the implementation frequency information DB.

For example, the update unit 357 calculates P' (X2 = 0) after the update, as "0.35", based on the formula (5). The update unit 357 calculates P' (X2 = 1) after the update, as "0.15", based on the formula (6). The update unit 357 calculates P' (X2 = 2) after the update, as "0.20", based on the formula (7). The update unit 357 calculates P' (X2 = 3) after the update, as "0.30", based on the formula (8).

[Expression 5]

$$P'(0) = \frac{\sum_{X2=0} P(X1|X2)}{\sum P(X1|X2)} = \frac{0.7}{0.7 + 0.3 + 0.4 + 0.6} = 0.35 \qquad \cdots (5)$$

[Expression 6]

$$P'(1) = \frac{\sum_{X2=0} P(X1|X2)}{\sum P(X1|X2)} = \frac{0.3}{0.7 + 0.3 + 0.4 + 0.6} = 0.15 \qquad \cdots (6)$$

[Expression 7]

$$P'(2) = \frac{\sum_{X2=0} P(X1|X2)}{\sum P(X1|X2)} = \frac{0.4}{0.7 + 0.3 + 0.4 + 0.6} = 0.20 \qquad \cdots (7)$$

[Expression 8]

$$P'(3) = \frac{\sum_{X2=0} P(X1|X2)}{\sum P(X1|X2)} = \frac{0.6}{0.7 + 0.3 + 0.4 + 0.6} = 0.30 \qquad \cdots (8)$$

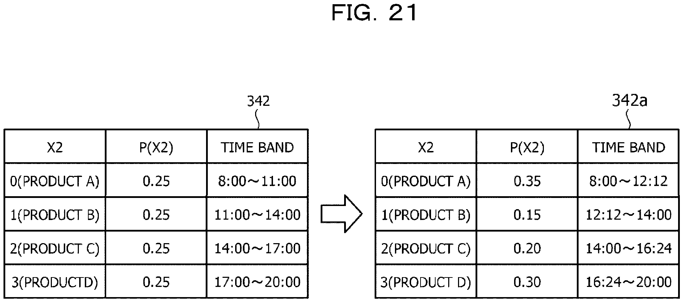

FIG. 21 is a diagram for explaining processing of the update unit according to the third embodiment. The implementation frequency information DB 342 is an implementation frequency information DB before being updated. An implementation frequency information DB 342a is an implementation frequency information DB updated by the update unit 357.

The update unit 357 sets 0.35, 0.15, 0.20, and 0.30 to respective cells of P' (X2) in the implementation frequency information DB 342a, based on the above calculation result. Furthermore, the update unit 357 sets a time band according to P' (X2). For example, a time band corresponding to P' (X2) = 0.35 is set to "8:00 to 12:12". A time band corresponding to P' (X2) = 0.15 is set to "12:12 to 14:00". A time band corresponding to P' (X2) = 0.20 is set to "14:00 to 16:24". A time band corresponding to P' (X2) = 0.30 is set to "16:24 to 20:00".

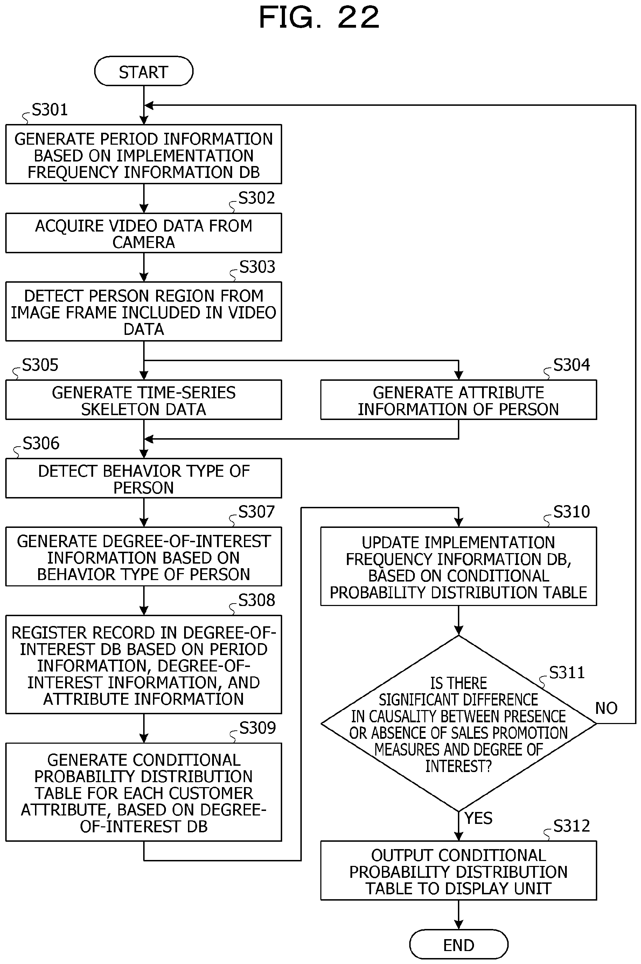

Next, an example of a processing procedure of the information processing device 300 according to the third embodiment will be described. FIG. 22 is a flowchart illustrating the processing procedure of the information processing device according to the third embodiment. As illustrated in FIG. 22, the evaluation unit 356 of the information processing device 300 generates the period information, based on the implementation frequency information DB 342 (step S301). The acquisition unit 351 of the information processing device 300 acquires the video data from the camera 10 (step S302).

The skeleton detection unit 352 and the attribute estimation unit 355 of the information processing device 300 detect the person region from the image data included in the video data (step S303). The skeleton detection unit 352 generates the time-series skeleton data (step S305). The attribute estimation unit 355 generates the attribute information of the person (step S304).

The motion detection unit 353 of the information processing device 300 detects the behavior type of the person, based on the time-series skeleton data (step S306). The psychological estimation unit 354 generates the degree-of-interest information, based on the behavior type of the person (step S307).

The evaluation unit 356 of the information processing device 300 registers a record (information regarding date and time, customer attribute, X3, X2, and X1) in the degree-of-interest DB 341, based on the period information, the degree-of-interest information, and the attribute information (step S308). The evaluation unit 356 generates the conditional probability distribution table for each customer attribute, based on the degree-of-interest DB 341 (step S309).

The update unit 357 of the information processing device 300 updates the implementation frequency information DB 342, based on the conditional probability distribution table (step S310). In a case where there is no significant difference in the causality with the presence or absence of the sales promotion measures (step S311, No), the evaluation unit 356 proceeds the procedure to step S301.

On the other hand, in a case where there is a significant difference in the causality with the presence or absence of the sales promotion measures (step S311, Yes), the evaluation unit 356 outputs the conditional probability distribution table to the display unit 330 (step S312). Note that an administrator or the like of a store refers to the conditional probability distribution table output to the display unit 330 and adopts the sales promotion measures having the significant difference.

Next, effects of the information processing device 300 according to the third embodiment will be described. The information processing device 300 repeatedly executes processing for specifying a behavior of a customer for purchasing the product by analyzing the video data imaged by the camera 10 and specifying a degree of interest according to the specified behavior. Furthermore, the information processing device 300 acquires period information regarding a period when the sales promotion measures for each CM moving image are implemented and evaluates the sales promotion measures based on a change in the degree of interest before and after the sales promotion measures. As a result, it is possible to evaluate the effectiveness of the sales promotion measures by each CM moving image.

Next, an example of a hardware configuration of a computer that implements functions similar to those of the information processing devices 100 (200, 300) described above will be described. FIG. 21 is a diagram illustrating an example of a hardware configuration of a computer that implements functions similar to those of the information processing devices according to the embodiments.

As illustrated in FIG. 21, a computer 400 includes a CPU 401 that executes various types of arithmetic processing, an input device 402 that receives data input from a user, and a display 403. Furthermore, the computer 400 includes a communication device 404 that exchanges data with an external device or the like via a wired or wireless network, and an interface device 405. Furthermore, the computer 400 includes a random access memory (RAM) 406 that temporarily stores various types of information, and a hard disk device 407. Then, each of the devices 401 to 407 is coupled to a bus 408.

The hard disk device 407 includes an acquisition program 407a, a skeleton detection program 407b, a motion detection program 407c, a psychological estimation program 407d, a specification program 407e, an evaluation program 407f, and an update program 407g. The CPU 401 reads each of the programs 407a to 407f and develops the programs in the RAM 406.

The acquisition program 407a functions as an acquisition process 406a. The skeleton detection program 407b functions as a skeleton detection process 406b. The motion detection program 407c functions as a motion detection process 406c. The psychological estimation program 407d functions as a psychological estimation process 406d. The specification program 407e functions as a specification process 406e. The evaluation program 407f functions as an evaluation process 406f. The update program 407g functions as an update process 406g.

Processing of the acquisition process 406a corresponds to the processing of the acquisition units 151, 251, and 351. Processing of the skeleton detection process 406b corresponds to the processing of the skeleton detection units 152, 252, and 352. Processing of the motion detection process 406c corresponds to the processing of the motion detection units 153, 253, and 353. Processing of the psychological estimation process 406d corresponds to the processing of the psychological estimation units 154, 254, and 354. The specification process 407e corresponds to the attribute estimation units 155 and 355 or the person specification unit 255. Processing of the evaluation process 406e corresponds to the processing of the evaluation units 156, 256, and 356. Processing of the update process 406e corresponds to the processing of the update units 157, 257, and 357.

Note that each of the programs 407a to 407g does not necessarily need to be stored in the hard disk device 407 in advance. For example, each of the programs is stored beforehand in a "portable physical medium" to be inserted in the computer 400, such as a flexible disk (FD), a compact disc read only memory (CD-ROM), a digital versatile disc (DVD), a magneto-optical disk, or an integrated circuit (IC) card. Then, the computer 400 may read and execute each of the programs 407a to 407g.

## Claims

1. An evaluation program for causing a computer to execute a process comprising:

   acquiring a video obtained by imaging an area that includes a product shelf where a product is arranged;
   specifying a behavior of a person of purchasing the product by analyzing the acquired video;
   acquiring purchase psychology information that is based on the behavior of purchasing the product and that indicates purchase psychology of the person;
   acquiring period information regarding a period when sales promotion measures for the product are implemented;
analyzing a change in the acquired purchase psychology information, before and after the sales promotion measures, based on the period information; and
evaluating the sales promotion measures, based on the analyzed change.

2. The evaluation program according to claim 1 for causing the computer to execute the process further comprising:
generating the purchase psychology information, based on the specified behavior.

3. The evaluation program according to claim 2, wherein
the purchase psychology information is information that indicates whether or not the person is interested in the product, and the generating processing specifies a behavior of the person of staying in front of the product shelf, based on the specified behavior and generates the purchase psychology information, based on a time when the person stays in front of the product shelf.

4. The evaluation program according to claim 2, wherein
the purchase psychology information is information that indicates whether or not there is a reliability of the person with respect to the product, and the generating processing specifies a behavior of the person of stretching a hand to the product on the product shelf, based on the specified behavior and generates the purchase psychology information, based on a cumulative number of times when the person stretches the hand.

5. The evaluation program according to claim 1, wherein
the evaluating process generates a conditional probability distribution table that indicates a probability of the presence or absence of the interest, by using whether or not the sales promotion measures are implemented as a condition, based on the purchase psychology information acquired in the period when the sales promotion measures are implemented and the purchase psychology information acquired in a period when the sales promotion measures are not implemented.

6. The evaluation program according to claim 2, for causing the computer to execute the process further comprising:
correcting the purchase psychology information, based on questionnaire information regarding the product input by the person.

7. The evaluation program according to claim 2, wherein
the sales promotion measures are sales promotion measures for a plurality of products, and the evaluating processing compares effectiveness of the sales promotion measures for each of the products.

8. An evaluation method implemented by a computer, the evaluation method a process comprising:

acquiring a video obtained by imaging an area that includes a product shelf where a product is arranged;
specifying a behavior of a person of purchasing the product by analyzing the acquired video;
acquiring purchase psychology information that is based on the behavior of purchasing the product and that indicates purchase psychology of the person;
acquiring period information regarding a period when sales promotion measures for the product are implemented;
analyzing a change in the acquired purchase psychology information, before and after the sales promotion measures, based on the period information; and
evaluating the sales promotion measures, based on the analyzed change.

9. The evaluation method according to claim 8 implemented by the computer further comprising:
generating the purchase psychology information, based on the specified behavior.

10. The evaluation method according to claim 9, wherein
the purchase psychology information is information that indicates whether or not the person is interested in the product, and the generating processing specifies a behavior of the person of staying in front of the product shelf, based on the specified behavior and generates the purchase psychology information, based on a time when the person stays in front of the product shelf.

11. The evaluation method according to claim 9, wherein
the purchase psychology information is information that indicates whether or not there is a reliability of the person with respect to the product, and the generating processing specifies a behavior of the person of stretching a hand to the product on the product shelf, based on the specified behavior and generates the purchase psychology information, based on a cumulative number of times when the person stretches the hand.

12. An information processing apparatus comprising:
a controller configured to:

acquire a video obtained by imaging an area that includes a product shelf where a product is arranged;
specify a behavior of a person of purchasing the product by analyzing the acquired video;
acquire purchase psychology information that is based on the behavior of purchasing the product and that indicates purchase psychology of the person;
acquire period information regarding a period when sales promotion measures for the product are implemented;
analyze a change in the acquired purchase psychology information, before and after the sales promotion measures, based on the period information; and
evaluate the sales promotion measures, based on the analyzed change.

13. The information processing apparatus according to claim 12, the controller further configured to:
generate the purchase psychology information, based on the specified behavior.

14. The information processing apparatus according to claim 13, wherein the purchase psychology information is information that indicates whether or not the person is interested in the product, and the generating processing specifies a behavior of the person of staying in front of the product shelf, based on the specified behavior and generates the purchase psychology information, based on a time when the person stays in front of the product shelf.

15. The information processing apparatus according to claim 13, wherein the purchase psychology information is information that indicates whether or not there is a reliability of the person with respect to the product, and the generating processing specifies a behavior of the person of stretching a hand to the product on the product shelf, based on the specified behavior and generates the purchase psychology information, based on a cumulative number of times when the person stretches the hand.

# FIG. 1

10a

10b

10c

10d

100

INFORMATION
PROCESSING
DEVICE

# FIG. 2

┌─────20b

| X3 | P(X3) |
|---|---|
| 0(False) | 0.5 |
| 1(True) | 0.5 |

POP

⟹

┌─────25

**PERIOD INFORMATION**

NO POP IN MORNING
POP IS IMPLEMENTED
IN AFTERNOON

┌─────20a

| X2 | P(X2) |
|---|---|
| 0(False) | 0.5 |
| 1(True) | 0.5 |

CM MOVING IMAGE

⟹

REPEAT ON/OFF OF CM
MOVING IMAGE EVERY
ONE HOUR

# FIG. 3

26

26-3 — X3    X2 — 26-2

X1 — 26-1

30

| X2 | X3 | P(X1 \| X2, X3) | |
|---|---|---|---|
| | | 0(False) | 1(True) |
| 0(False) | 0(False) | 0.6 | 0.4 |
| 0(False) | 1(True) | 0.2 | 0.8 |
| 1(True) | 0(False) | 0.5 | 0.5 |
| 1(True) | 1(True) | 0.3 | 0.7 |

141

| DATE AND TIME | CUSTOMER ATTRIBUTE | X3 (WHETHER OR NOT POP IS IMPLEMENTED) | X2 (WHETHER OR NOT CM IS IMPLEMENTED) | X1 (INTERESTED OR NOT) |
|---|---|---|---|---|
| 2/3 10:04 | FEMALE IN 20S AND 30S | False | False | True |
| 2/3 10:34 | MALE IN 40S AND 50S | False | False | False |
| 2/3 11:05 | FEMALE IN 60S OR OLDER | False | True | False |
| 2/3 11:33 | FEMALE IN 20S AND 30S | False | True | True |
| 2/3 11:43 | MALE IN 60S OR OLDER | False | True | True |
| 2/3 12:02 | MALE IN 40S AND 50S | True | False | False |
| 2/3 12:20 | MALE IN 20S AND 30S | True | False | True |
| 2/3 12:41 | FEMALE IN 40S AND 50S | True | False | False |
| 2/3 13:33 | FEMALE IN 60S OR OLDER | True | True | True |
| 2/3 13:50 | MALE IN 20S AND 30S | True | True | True |
| ... | ... | ... | ... | ... |

23

# FIG. 4

INFORMATION PROCESSING DEVICE ⌐100

## CONTROL UNIT ⌐150

| | |
|---|---|
| COMMUNICATION UNIT ⌐110 | ACQUISITION UNIT ⌐151 |
| INPUT UNIT ⌐120 | SKELETON DETECTION UNIT ⌐152 |
| DISPLAY UNIT ⌐130 | MOTION DETECTION UNIT ⌐153 |
| | PSYCHOLOGICAL ESTIMATION UNIT ⌐154 |
| | ATTRIBUTE ESTIMATION UNIT ⌐155 |
| | EVALUATION UNIT ⌐156 |
| | UPDATE UNIT ⌐157 |

## STORAGE UNIT ⌐140

DEGREE-OF-INTEREST DB ⌐141

IMPLEMENTATION FREQUENCY INFORMATION DB ⌐142

CONDITIONAL PROBABILITY DISTRIBUTION TABLE DB ⌐143

IMAGING DB ⌐144

MODEL DB ⌐145

# FIG. 5

142

| SALES PROMOTION MEASURES | IMPLEMENTATION FREQUENCY INFORMATION |
|---|---|
| CM MOVING IMAGE | IMPLEMENTATION FREQUENCY INFORMATION 20a |
| POP | IMPLEMENTATION FREQUENCY INFORMATION 20b |

# FIG. 6

143

| CUSTOMER ATTRIBUTE | CONDITIONAL PROBABILITY DISTRIBUTION TABLE |
|---|---|
| FEMALE IN 20S AND 30S | CONDITIONAL PROBABILITY DISTRIBUTION TABLE CORRESPONDING TO CUSTOMER ATTRIBUTE "FEMALE IN 20S AND 30S" |
| MALE IN 20S AND 30S | CONDITIONAL PROBABILITY DISTRIBUTION TABLE CORRESPONDING TO CUSTOMER ATTRIBUTE "MALE IN 20S AND 30S" |
| FEMALE IN 40S AND 50S | CONDITIONAL PROBABILITY DISTRIBUTION TABLE CORRESPONDING TO CUSTOMER ATTRIBUTE "FEMALE IN 40S AND 50S" |
| MALE IN 40S AND 50S | CONDITIONAL PROBABILITY DISTRIBUTION TABLE CORRESPONDING TO CUSTOMER ATTRIBUTE "MALE IN 40S AND 50S" |

# FIG. 7

144

| CAMERA IDENTIFICATION INFORMATION | VIDEO DATA |
|---|---|
| C-10a | VIDEO DATA IMAGED BY CAMERA 10a |
| C-10b | VIDEO DATA IMAGED BY CAMERA 10b |
| C-10c | VIDEO DATA IMAGED BY CAMERA 10c |
| C-10d | VIDEO DATA IMAGED BY CAMERA 10d |
| ... | ... |

# FIG. 8

# FIG. 9

| REFERENCE NUMERAL | JOINT NAME |
|---|---|
| ar0 | SPINE_BASE |
| ar1 | SPINE_MID |
| ar2 | SPINE_SHOULDER |
| ar3 | HEAD |
| ar4 | SHOULDER_LEFT |
| ar5 | ELBOW_LEFT |
| ar6 | WRIST_LEFT |
| ar7 | SHOULDER_RIGHT |
| ar8 | ELBOW_RIGHT |
| ar9 | WRIST_RIGHT |
| ar10 | HIP_LEFT |
| ar11 | KNEE_LEFT |
| ar12 | ANKLE_LEFT |
| ar13 | FOOT_LEFT |
| ar14 | HIP_RIGHT |
| ar15 | KNEE_RIGHT |
| ar16 | ANKLE_RIGHT |
| ar17 | FOOT_RIGHT |
| ar18 | NECK |
| ar19 | HAND_TIP_LEFT |
| ar20 | HAND_TIP_RIGHT |

# FIG. 10

START

S101
GENERATE PERIOD INFORMATION BASED ON IMPLEMENTATION FREQUENCY INFORMATION DB

S102
ACQUIRE VIDEO DATA FROM CAMERA

S103
DETECT PERSON REGION FROM IMAGE FRAME INCLUDED IN VIDEO DATA

S104
GENERATE ATTRIBUTE INFORMATION OF PERSON

S105
GENERATE TIME-SERIES SKELETON DATA

S106
DETECT BEHAVIOR TYPE OF PERSON

S107
GENERATE DEGREE-OF-INTEREST INFORMATION BASED ON BEHAVIOR TYPE OF PERSON

S108
REGISTER RECORD IN DEGREE-OF-INTEREST DB BASED ON PERIOD INFORMATION, RELIABILITY INFORMATION, AND QUESTIONNAIRE INFORMATION

S109
GENERATE CONDITIONAL PROBABILITY DISTRIBUTION TABLE FOR EACH CUSTOMER ID, BASED ON DEGREE-OF-INTEREST DB

S110
UPDATE IMPLEMENTATION FREQUENCY INFORMATION, BASED ON CONDITIONAL PROBABILITY DISTRIBUTION TABLE

S111
IS THERE SIGNIFICANT DIFFERENCE IN CAUSALITY BETWEEN PRESENCE OR ABSENCE OF SALES PROMOTION MEASURES AND DEGREE OF INTEREST?

NO

YES

S112
OUTPUT CONDITIONAL PROBABILITY DISTRIBUTION TABLE TO DISPLAY UNIT

END

# FIG. 11

10a

10b

10c

10d

200

INFORMATION
PROCESSING
DEVICE

50

QUESTIONNAIRE
INPUT DEVICE

# FIG. 12

INFORMATION PROCESSING DEVICE — 200

CONTROL UNIT — 250

STORAGE UNIT — 240

COMMUNICATION UNIT — 210

INPUT UNIT — 220

DISPLAY UNIT — 230

ACQUISITION UNIT — 251

SKELETON DETECTION UNIT — 252

MOTION DETECTION UNIT — 253

PSYCHOLOGICAL ESTIMATION UNIT — 254

PERSON SPECIFICATION UNIT — 255

EVALUATION UNIT — 256

UPDATE UNIT — 257

RELIABILITY DB — 241

IMPLEMENTATION FREQUENCY INFORMATION DB — 242

CONDITIONAL PROBABILITY DISTRIBUTION TABLE DB — 243

IMAGING DB — 244

MODEL DB — 245

# FIG. 13

241

| DATE AND TIME | CUSTOMER ID | X3 (WHETHER OR NOT POP IS IMPLEMENTED) | X2 (WHETHER OR NOT CM IS IMPLEMENTED) | X1 (WHETHER OR NOT THERE IS RELIABILITY) |
|---|---|---|---|---|
| 2/3 10:04 | U10 | False | False | True |
| 2/3 10:34 | U11 | False | False | False |
| 2/3 11:05 | U12 | False | True | False |
| 2/3 11:33 | U10 | False | True | True |
| 2/3 11:43 | U14 | False | True | True |
| 2/3 12:02 | U11 | True | False | False |
| 2/3 12:20 | U13 | True | False | True |
| 2/3 12:41 | U14 | True | False | False |
| 2/3 13:33 | U12 | True | True | True |
| 2/3 13:50 | U13 | True | True | True |
| ... | ... | ... | ... | ... |

# FIG. 14

243

| CUSTOMER ID | CONDITIONAL PROBABILITY DISTRIBUTION TABLE |
|---|---|
| U10 | CONDITIONAL PROBABILITY DISTRIBUTION TABLE CORRESPONDING TO CUSTOMER ID "U10" |
| U11 | CONDITIONAL PROBABILITY DISTRIBUTION TABLE CORRESPONDING TO CUSTOMER ID "U11" |
| U12 | CONDITIONAL PROBABILITY DISTRIBUTION TABLE CORRESPONDING TO CUSTOMER ID "U12" |
| ... | ... |

# FIG. 15

START

**S201**
GENERATE PERIOD INFORMATION BASED ON IMPLEMENTATION FREQUENCY INFORMATION DB

**S202**
ACQUIRE VIDEO DATA FROM CAMERA

**S203**
DETECT PERSON REGION FROM IMAGE FRAME INCLUDED IN VIDEO DATA

**S204**
SET CUSTOMER ID CORRESPONDING TO PERSON

**S205**
GENERATE TIME-SERIES SKELETON DATA

**S206**
DETECT BEHAVIOR TYPE OF PERSON

**S207**
GENERATE RELIABILITY INFORMATION, BASED ON BEHAVIOR TYPE OF PERSON

**S208**
ACQUIRE QUESTIONNAIRE INFORMATION AND SET CUSTOMER ID

**S209**
REGISTER RECORD IN RELIABILITY DB, BASED ON PERIOD INFORMATION, RELIABILITY INFORMATION, AND QUESTIONNAIRE INFORMATION

**S210**
GENERATE CONDITIONAL PROBABILITY DISTRIBUTION TABLE FOR EACH CUSTOMER ID, BASED ON RELIABILITY DB

**S211**
UPDATE IMPLEMENTATION FREQUENCY INFORMATION, BASED ON CONDITIONAL PROBABILITY DISTRIBUTION TABLE

**S212**
IS THERE SIGNIFICANT DIFFERENCE IN CAUSALITY BETWEEN PRESENCE OR ABSENCE OF SALES PROMOTION MEASURES AND DEGREE OF INTEREST?

NO

YES

**S213**
OUTPUT CONDITIONAL PROBABILITY DISTRIBUTION TABLE TO DISPLAY UNIT

END

# FIG. 16

```
                                                         ⌐300
┌─────────────────────────────────────────────────────────────────┐
│              INFORMATION PROCESSING DEVICE                        │
│                          ⌐350                    ⌐340             │
│                  ┌──────────────────┐    ┌──────────────────┐     │
│                  │  CONTROL UNIT    │    │  STORAGE UNIT    │     │
│       ⌐310       │         ⌐351     │    │         ⌐341     │     │
│  ┌────────────┐  │  ┌────────────┐  │    │  ┌────────────┐  │     │
│  │COMMUNICATION│ │  │ ACQUISITION│  │    │  │ DEGREE-OF- │  │     │
│  │    UNIT    │──┤  │    UNIT    │  │    │  │ INTEREST DB│  │     │
│  └────────────┘  │  └────────────┘  │    │  └────────────┘  │     │
│       ⌐320       │         ⌐352     │    │         ⌐342     │     │
│  ┌────────────┐  │  ┌────────────┐  │    │  ┌────────────┐  │     │
│  │ INPUT UNIT │──┤  │  SKELETON  │  │    │  │IMPLEMENTATIO│ │     │
│  │            │  │  │DETECTION UNIT│ │    │  │N FREQUENCY  │ │     │
│  └────────────┘  │  └────────────┘  │    │  │INFORMATION  │ │     │
│       ⌐330       │         ⌐353     │    │  │    DB      │  │     │
│  ┌────────────┐  │  ┌────────────┐  │    │  └────────────┘  │     │
│  │DISPLAY UNIT│──┤  │   MOTION   │  │    │         ⌐343     │     │
│  │            │  │  │DETECTION UNIT│ │    │  ┌────────────┐  │     │
│  └────────────┘  │  └────────────┘  │    │  │ CONDITIONAL│  │     │
│                  │         ⌐354     │    │  │PROBABILITY │  │     │
│                  │  ┌────────────┐  │    │  │DISTRIBUTION│  │     │
│                  │  │PSYCHOLOGICAL│ │    │  │ TABLE DB   │  │     │
│                  │  │ESTIMATION UNIT│ │   │  └────────────┘  │     │
│                  │  └────────────┘  │    │         ⌐344     │     │
│                  │         ⌐355     │    │  ┌────────────┐  │     │
│                  │  ┌────────────┐  │    │  │            │  │     │
│                  │  │ ATTRIBUTE  │  │    │  │ IMAGING DB │  │     │
│                  │  │ESTIMATION UNIT│ │   │  │            │  │     │
│                  │  └────────────┘  │    │  └────────────┘  │     │
│                  │         ⌐356     │    │         ⌐345     │     │
│                  │  ┌────────────┐  │    │  ┌────────────┐  │     │
│                  │  │ EVALUATION │  │    │  │            │  │     │
│                  │  │    UNIT    │  │    │  │  MODEL DB  │  │     │
│                  │  └────────────┘  │    │  │            │  │     │
│                  │         ⌐357     │    │  └────────────┘  │     │
│                  │  ┌────────────┐  │    │                  │     │
│                  │  │ UPDATE UNIT│  │    │                  │     │
│                  │  └────────────┘  │    │                  │     │
│                  └──────────────────┘    └──────────────────┘     │
└─────────────────────────────────────────────────────────────────┘
```

# FIG. 17

341

| DATE AND TIME | ATTRIBUTE INFORMATION | X2 | | | | X1 |
|---|---|---|---|---|---|---|
| | | 0 (PRODUCT A) | 1 (PRODUCT B) | 2 (PRODUCT C) | 3 (PRODUCT D) | |
| 2/3 10:04 | FEMALE IN 20S AND 30S | True | False | False | False | True |
| 2/3 11:05 | FEMALE IN 20S AND 30S | False | True | False | False | False |
| ... | ... | ... | ... | ... | ... | ... |

# FIG. 18

342

| X2 | P(X2) | TIME BAND |
|---|---|---|
| 0 (PRODUCT A) | 0.25 | 8:00 TO 11:00 |
| 1 (PRODUCT B) | 0.25 | 11:00 TO 14:00 |
| 2 (PRODUCT C) | 0.25 | 14:00 TO 17:00 |
| 3 (PRODUCT D) | 0.25 | 17:00 TO 20:00 |

# FIG. 19

343

| CUSTOMER ATTRIBUTE | CONDITIONAL PROBABILITY DISTRIBUTION TABLE |
|---|---|
| FEMALE IN 20S AND 30S | CONDITIONAL PROBABILITY DISTRIBUTION TABLE CORRESPONDING TO CUSTOMER ATTRIBUTE "FEMALE IN 20S AND 30S" |
| MALE IN 20S AND 30S | CONDITIONAL PROBABILITY DISTRIBUTION TABLE CORRESPONDING TO CUSTOMER ATTRIBUTE "MALE IN 20S AND 30S" |
| FEMALE IN 40S AND 50S | CONDITIONAL PROBABILITY DISTRIBUTION TABLE CORRESPONDING TO CUSTOMER ATTRIBUTE "FEMALE IN 40S AND 50S" |
| MALE IN 40S AND 50S | CONDITIONAL PROBABILITY DISTRIBUTION TABLE CORRESPONDING TO CUSTOMER ATTRIBUTE "MALE IN 40S AND 50S" |
| ... | ... |

# FIG. 20

35

| X2 | P(X1 \| X2) | |
|---|---|---|
| | 0 | 1 |
| 0 (PRODUCT A) | 0.3 | 0.7 |
| 1 (PRODUCT B) | 0.7 | 0.3 |
| 2 (PRODUCT C) | 0.6 | 0.4 |

FIG. 21

342

| X2 | P(X2) | TIME BAND |
|---|---|---|
| 0(PRODUCT A) | 0.25 | 8:00~11:00 |
| 1(PRODUCT B) | 0.25 | 11:00~14:00 |
| 2(PRODUCT C) | 0.25 | 14:00~17:00 |
| 3(PRODUCTD) | 0.25 | 17:00~20:00 |

342a

| X2 | P(X2) | TIME BAND |
|---|---|---|
| 0(PRODUCT A) | 0.35 | 8:00~12:12 |
| 1(PRODUCT B) | 0.15 | 12:12~14:00 |
| 2(PRODUCT C) | 0.20 | 14:00~16:24 |
| 3(PRODUCT D) | 0.30 | 16:24~20:00 |

# FIG. 22

START

**S301**
GENERATE PERIOD INFORMATION BASED ON IMPLEMENTATION FREQUENCY INFORMATION DB

**S302**
ACQUIRE VIDEO DATA FROM CAMERA

**S303**
DETECT PERSON REGION FROM IMAGE FRAME INCLUDED IN VIDEO DATA

**S304**
GENERATE ATTRIBUTE INFORMATION OF PERSON

**S305**
GENERATE TIME-SERIES SKELETON DATA

**S306**
DETECT BEHAVIOR TYPE OF PERSON

**S307**
GENERATE DEGREE-OF-INTEREST INFORMATION BASED ON BEHAVIOR TYPE OF PERSON

**S308**
REGISTER RECORD IN DEGREE-OF-INTEREST DB BASED ON PERIOD INFORMATION, DEGREE-OF-INTEREST INFORMATION, AND ATTRIBUTE INFORMATION

**S309**
GENERATE CONDITIONAL PROBABILITY DISTRIBUTION TABLE FOR EACH CUSTOMER ATTRIBUTE, BASED ON DEGREE-OF-INTEREST DB

**S310**
UPDATE IMPLEMENTATION FREQUENCY INFORMATION DB, BASED ON CONDITIONAL PROBABILITY DISTRIBUTION TABLE

**S311**
IS THERE SIGNIFICANT DIFFERENCE IN CAUSALITY BETWEEN PRESENCE OR ABSENCE OF SALES PROMOTION MEASURES AND DEGREE OF INTEREST?

NO

YES

**S312**
OUTPUT CONDITIONAL PROBABILITY DISTRIBUTION TABLE TO DISPLAY UNIT

END

## FIG. 23

| COMPUTER | | | | |
|---|---|---|---|---|
| CPU 401 | INPUT DEVICE 402 | DISPLAY 403 | COMMUNICATION DEVICE 404 | INTERFACE DEVICE 405 |

400
408

RAM 406

| ACQUISITION PROCESS | 406a |
|---|---|
| SKELETON DETECTION PROCESS | 406b |
| MOTION DETECTION PROCESS | 406c |
| PSYCHOLOGICAL ESTIMATION PROCESS | 406d |
| SPECIFICATION PROCESS | 406e |
| EVALUATION PROCESS | 406f |
| UPDATE PROCESS | 406g |

HARD DISK DEVICE 407

| ACQUISITION PROGRAM | 407a |
|---|---|
| SKELETON DETECTION PROGRAM | 407b |
| MOTION DETECTION PROGRAM | 407c |
| PSYCHOLOGICAL ESTIMATION PROGRAM | 407d |
| SPECIFICATION PROGRAM | 407e |
| EVALUATION PROGRAM | 407f |
| UPDATE PROGRAM | 407g |

Europäisches
Patentamt

European
Patent Office

Office européen
des brevets

# EUROPEAN SEARCH REPORT

**Application Number**

EP 24 19 1391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/206633 A1 (KOHATA SHUN [JP]) 29 June 2023 (2023-06-29) * paragraphs [0005], [0031] - [0039] * * paragraphs [0044] - [0053] * * paragraphs [0059] - [0063] * * paragraphs [0066] - [0075] * ----- | 1-15 | INV. G06Q30/0242 G06Q30/0201 G06Q30/0272 |
| Y | US 2013/335572 A1 (FUHR JACKIE [US] ET AL) 19 December 2013 (2013-12-19) * paragraphs [0009] - [0011] * * paragraphs [0019] - [0025] * * paragraph [0032] * ----- | 1-15 | |
| A | US 2022/343342 A1 (KOVACS DAVID [US] ET AL) 27 October 2022 (2022-10-27) * paragraphs [0028], [0046] - [0049], [0054] * * paragraphs [0069], [0080] * ----- | 1-15 | |
| | | | **TECHNICAL FIELDS SEARCHED (IPC)** G06Q |

The present search report has been drawn up for all claims

| Place of search | Date of completion of the search | Examiner |
|---|---|---|
| The Hague | 21 November 2024 | De Smet, Michaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

2

## ANNEX TO THE EUROPEAN SEARCH REPORT
## ON EUROPEAN PATENT APPLICATION NO.

EP 24 19 1391

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | Publication date | Patent family member(s) | | Publication date |
|---|---|---|---|---|
| US 2023206633 A1 | 29-06-2023 | EP | 4202880 A1 | 28-06-2023 |
| | | JP | 7276419 B1 | 18-05-2023 |
| | | JP | 2023094868 A | 06-07-2023 |
| | | US | 2023206633 A1 | 29-06-2023 |
| US 2013335572 A1 | 19-12-2013 | US | 8502869 B1 | 06-08-2013 |
| | | US | 2013335572 A1 | 19-12-2013 |
| US 2022343342 A1 | 27-10-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023094868 A